(19) Europäisches Patentamt
European Patent Office
Office européen des brevets

(11) **EP 4 637 240 A1**

(12) **EUROPEAN PATENT APPLICATION**
published in accordance with Art. 153(4) EPC

(43) Date of publication:
**22.10.2025 Bulletin 2025/43**

(21) Application number: **23902629.7**

(22) Date of filing: **11.12.2023**

(51) International Patent Classification (IPC):
**H04W 72/0453** (2023.01)

(52) Cooperative Patent Classification (CPC):
**H04L 1/00; H04W 72/044; H04W 72/0446;**
**H04W 72/0453; H04W 72/0457**

(86) International application number:
**PCT/CN2023/137751**

(87) International publication number:
**WO 2024/125433 (20.06.2024 Gazette 2024/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.12.2022 CN 202211599843**

(71) Applicant: **Datang Mobile Communications**
**Equipment Co., Ltd.**
**Beijing 100085 (CN)**

(72) Inventors:
• **WANG, Junwei**
**Beijing 100085 (CN)**
• **GAO, Xuejuan**
**Beijing 100085 (CN)**
• **XING, Yanping**
**Beijing 100085 (CN)**
• **ZHU, Min**
**Beijing 100085 (CN)**

(74) Representative: **Dompatent**
**Partnerschaft von Patent- und Rechtsanwälten**
**mbB**
**Deichmannhaus am Dom**
**Bahnhofsvorplatz 1**
**50667 Köln (DE)**

(54) **INFORMATION TRANSMISSION METHOD AND APPARATUS, TERMINAL DEVICE, AND NETWORK DEVICE**

(57) The present disclosure provides an information transmission method, an information transmission device, a terminal device and a network device, which relates to the field of communication technologies. The information transmission method includes: determining configuration information for at least two resource blocks; and receiving scheduling information transmitted by a network device, where the scheduling information is used to indicate the terminal device to perform data transmission and/or reception on at least part of resources of the at least two resource blocks based on the configuration information; the at least two resource blocks belong to one cell or one bandwidth part, and the resource block includes at least one of: a frequency domain resource block, a time domain resource block, a code domain resource block, or a spatial domain resource block.

FIG. 3

**Description**

**CROSS-REFERENCE TO RELATED APPLICATION**

This application claims a priority to Chinese Patent Application No. 202211599843.9 filed on December 12, 2022, titled "INFORMATION TRANSMISSION METHOD, INFORMATION TRANSMISSION DEVICE, TERMINAL DEVICE, AND NETWORK DEVICE", which is incorporated in its entirety by reference herein.

**TECHNICAL FIELD**

The present disclosure relates to the field of communication technologies, and in particular to an information transmission method, an information transmission device, a terminal device and a network device.

**BACKGROUND**

A serving cell over multi-carriers (serving cell over multi-carriers, SCOMX, which is also referred to as a multi-carrier cell) represents a serving cell that can support multiple carriers. The multi-carrier cell is a cell mode for reducing capability requirements of user equipment (User Equipment, UE, which is also called a terminal), improving throughput of data transmission of terminals, and reducing common signaling header overhead. Its core idea is that a serving cell contains multiple carriers. For SCOMX, currently only the concept is proposed, with no further implementations provided.

**SUMMARY**

The embodiments of the present disclosure provide an information transmission method, an information transmission device, a terminal device and a network device, to achieve resource configuration and scheduling in a SCOMX scenario.
In order to solve the above technical problems, embodiments of the present disclosure provide an information transmission method, which is performed by a terminal device and includes:

determining configuration information for at least two resource blocks; and
receiving scheduling information transmitted by a network device, where the scheduling information is used to indicate the terminal device to perform data transmission and/or reception on at least part of resources of the at least two resource blocks based on the configuration information;
the at least two resource blocks belong to one cell or one bandwidth part, and the resource block includes at least one of: a frequency domain resource block, a time domain resource block, a code domain resource block, or a spatial domain resource block.

Optionally, the configuration information includes at least one of:

a resource starting location;
a resource width; or,
frequency point information.

Optionally, the configuration information further includes at least one of:

a subcarrier spacing (SCS);
a cyclic prefix (CP) type.

Optionally, the at least two resource blocks satisfy at least one of:

a sum of resource quantities of the at least two resource blocks is less than or equal to a preset resource quantity threshold; or,
the at least two resource blocks do not overlap with each other.

Optionally, the preset resource quantity threshold is a maximum value configured for one carrier or one bandwidth part.
Optionally, the resource block satisfies at least one of:

belonging to a licensed spectrum; or,
belonging to an unlicensed spectrum.

Optionally, a common message of a serving cell is transmitted via a target resource block, and the target resource block is one of the at least two resource blocks.

Optionally, the scheduling information includes at least one of:

modulation and coding schemes (MCS) of scheduled resource blocks;
antenna port indication information of scheduled resource blocks; or,
resource indication information of scheduled resource blocks.

Optionally, in a case that the scheduling information includes the MCSs of the scheduled resource blocks:

the scheduling information includes one MCS indication field, the MCS indication field indicates the MCSs of all scheduled resource blocks, and all scheduled resource blocks have identical modulation orders and code rates; or,
the scheduling information includes at least two MCS indication fields, each MCS indication field correspondingly indicates the MCS of one scheduled resource block, and different resource blocks have identical or different modulation orders.

Optionally, in a case that the scheduling information includes the antenna port indication information of the scheduled resource blocks:

the scheduling information includes one antenna port indication field, the antenna port indication field indicates antenna port configuration parameters of all scheduled resource blocks, and the antenna port configuration parameters of all scheduled resource blocks are the same; or,
the scheduling information includes at least two antenna port indication fields, each antenna port indication field correspondingly indicates an antenna port configuration parameter of one scheduled resource block, and the antenna port configuration parameters of different resource blocks are the same or different;
the antenna port configuration parameter includes at least one of:

a quantity of demodulation reference signal (DMRS) CDM groups without data;
a DMRS port index; or,
a rank value for data transmission.

Optionally, the resource indication information of the resource blocks includes frequency domain indication information, and bits occupied by the frequency domain indication information are determined based on a bandwidth of a configured target resource block;
the target resource block includes: a resource block belonging to a licensed spectrum; or the target resource block includes: a resource block belonging to a licensed spectrum and a resource block belonging to an unlicensed spectrum.

Optionally, in a case that a scheduled resource block belongs to an unlicensed spectrum, the scheduling information further includes: an unlicensed spectrum data transmission indicator;
the unlicensed spectrum data transmission indicator is used to indicate that the network device confirms a transmission or the network device does not confirm a transmission.

Optionally, receiving the scheduling information for the at least two resource blocks transmitted by the network device includes:

receiving, via a reception module corresponding to X target objects, Y resource blocks transmitted by the network device;
X and Y are positive integers greater than or equal to 1, X is less than Y, the target object includes: a cell, a carrier or a bandwidth part, and reception module includes: a channel estimation module, a quadrature amplitude modulation (QAM) demapping module and a channel decoding module.

The embodiments of the present disclosure also provide an information transmission method, which is performed by a network device and includes:

obtaining configuration information for at least two resource blocks; and
transmitting scheduling information to a terminal device, where the scheduling information is used to indicate a terminal device to perform data transmission and/or reception on at least part of resources of the at least two resource blocks based on the configuration information;

the at least two resource blocks belong to one cell or one bandwidth part, and the resource block includes at least one of: a frequency domain resource block, a time domain resource block, a code domain resource block, or a spatial domain resource block.

Optionally, the configuration information includes at least one of:

a resource starting location;
a resource width; or,
frequency point information.

Optionally, the configuration information further includes at least one of:

a subcarrier spacing (SCS); or,
a cyclic prefix (CP) type.

Optionally, the at least two resource blocks satisfy at least one of:

a sum of resource quantities of the at least two resource blocks is less than or equal to a preset resource quantity threshold; or,
the at least two resource blocks do not overlap with each other.

Optionally, the preset resource quantity threshold is a maximum value configured for one carrier or one bandwidth part.

Optionally, the resource block satisfies at least one of:

belonging to a licensed spectrum; or,
belonging to an unlicensed spectrum.

Optionally, a common message of a serving cell is transmitted via a target resource block, and the target resource block is one of the at least two resource blocks.

Optionally, the scheduling information includes at least one of:

modulation and coding schemes (MCS) of scheduled resource blocks;
antenna port indication information of scheduled resource blocks; or,
resource indication information of scheduled resource blocks.

Optionally, in a case that the scheduling information includes the MCSs of the scheduled resource blocks:

the scheduling information includes one MCS indication field, the MCS indication field indicates the MCSs of all scheduled resource blocks, and all scheduled resource blocks have identical modulation orders and code rates; or,
the scheduling information includes at least two MCS indication fields, each MCS indication field correspondingly indicates the MCS of one scheduled resource block, and different resource blocks have identical or different modulation orders.

Optionally, in a case that the scheduling information includes the antenna port indication information of the scheduled resource blocks:

the scheduling information includes one antenna port indication field, the antenna port indication field indicates antenna port configuration parameters of all scheduled resource blocks, and the antenna port configuration parameters of all scheduled resource blocks are the same; or,
the scheduling information includes at least two antenna port indication fields, each antenna port indication field correspondingly indicates an antenna port configuration parameter of one scheduled resource block, and the antenna port configuration parameters of different resource blocks are the same or different;
the antenna port configuration parameter includes at least one of:

a quantity of demodulation reference signal (DMRS) CDM groups without data;
a DMRS port index; or,

a rank value for data transmission.

Optionally, the resource indication information of the resource blocks includes frequency domain indication information, and bits occupied by the frequency domain indication information are determined based on a bandwidth of a configured target resource block;
the target resource block includes: a resource block belonging to a licensed spectrum; or the target resource block includes: a resource block belonging to a licensed spectrum and a resource block belonging to an unlicensed spectrum.
Optionally, in a case that a scheduled resource block belongs to an unlicensed spectrum, the scheduling information further includes: an unlicensed spectrum data transmission indicator;
the unlicensed spectrum data transmission indicator is used to indicate that the network device confirms a transmission or the network device does not confirm a transmission.
The present disclosure also provides a terminal device, including a memory, a transceiver, and a processor;

the memory is configured to store a computer program, the transceiver is configured to transmit and receive data under control of the processor, and the processor is configured to read the computer program in the memory to perform following operations:
determining configuration information for at least two resource blocks; and
receiving, via the transceiver, scheduling information transmitted by a network device, where the scheduling information is used to indicate the terminal device to perform data transmission and/or reception on at least part of resources of the at least two resource blocks based on the configuration information;
the at least two resource blocks belong to one cell or one bandwidth part, and the resource block includes at least one of: a frequency domain resource block, a time domain resource block, a code domain resource block, or a spatial domain resource block.

Optionally, the configuration information includes at least one of:

a resource starting location;
a resource width; or,
frequency point information.

Optionally, the configuration information further includes at least one of:

a subcarrier spacing (SCS); or,
a cyclic prefix (CP) type.

Optionally, the at least two resource blocks satisfy at least one of:

a sum of resource quantities of the at least two resource blocks is less than or equal to a preset resource quantity threshold; or,
the at least two resource blocks do not overlap with each other.

Optionally, the preset resource quantity threshold is a maximum value configured for one carrier or one bandwidth part.
Optionally, the resource block satisfies at least one of:

belonging to a licensed spectrum; or,
belonging to an unlicensed spectrum.

Optionally, a common message of a serving cell is transmitted via a target resource block, and the target resource block is one of the at least two resource blocks.
Optionally, the scheduling information includes at least one of:

modulation and coding schemes (MCS) of scheduled resource blocks;
antenna port indication information of scheduled resource blocks; or,
resource indication information of scheduled resource blocks.

Optionally, in a case that the scheduling information includes the MCSs of the scheduled resource blocks:

the scheduling information includes one MCS indication field, the MCS indication field indicates the MCSs of all scheduled resource blocks, and all scheduled resource blocks have identical modulation orders and code rates; or, the scheduling information includes at least two MCS indication fields, each MCS indication field correspondingly indicates the MCS of one scheduled resource block, and different resource blocks have identical or different modulation orders.

Optionally, in a case that the scheduling information includes the antenna port indication information of the scheduled resource blocks:

the scheduling information includes one antenna port indication field, the antenna port indication field indicates antenna port configuration parameters of all scheduled resource blocks, and the antenna port configuration parameters of all scheduled resource blocks are the same; or,
the scheduling information includes at least two antenna port indication fields, each antenna port indication field correspondingly indicates an antenna port configuration parameter of one scheduled resource block, and the antenna port configuration parameters of different resource blocks are the same or different;
the antenna port configuration parameter includes at least one of:

a quantity of demodulation reference signal (DMRS) CDM groups without data;
a DMRS port index; or,
a rank value for data transmission.

Optionally, the resource indication information of the resource blocks includes frequency domain indication information, and bits occupied by the frequency domain indication information are determined based on a bandwidth of a configured target resource block;
the target resource block includes: a resource block belonging to a licensed spectrum; or the target resource block includes: a resource block belonging to a licensed spectrum and a resource block belonging to an unlicensed spectrum.
Optionally, in a case that a scheduled resource block belongs to an unlicensed spectrum, the scheduling information further includes: an unlicensed spectrum data transmission indicator;
the unlicensed spectrum data transmission indicator is used to indicate that the network device confirms a transmission or the network device does not confirm a transmission.
Optionally, the processor is configured to read the computer program in the memory and perform following operation:

receiving, via a reception module corresponding to X target objects, Y resource blocks transmitted by the network device;
X and Y are positive integers greater than or equal to 1, X is less than Y, the target object includes: a cell, a carrier or a bandwidth part, and reception module includes: a channel estimation module, a quadrature amplitude modulation (QAM) demapping module and a channel decoding module.

The embodiments of the present disclosure also provide a network device, including a memory, a transceiver, and a processor;

the memory is configured to store a computer program, the transceiver is configured to transmit and receive data under control of the processor, and the processor is configured to read the computer program in the memory to perform following operations:
obtaining configuration information for at least two resource blocks; and
transmitting, via the transceiver, scheduling information to a terminal device, where the scheduling information is used to indicate a terminal device to perform data transmission and/or reception on at least part of resources of the at least two resource blocks based on the configuration information;
the at least two resource blocks belong to one cell or one bandwidth part, and the resource block includes at least one of: a frequency domain resource block, a time domain resource block, a code domain resource block, or a spatial domain resource block.

Optionally, the configuration information includes at least one of:

a resource starting location;
a resource width; or,
frequency point information.

Optionally, the configuration information further includes at least one of:

a subcarrier spacing (SCS); or,
a cyclic prefix (CP) type.

Optionally, the scheduling information includes at least one of:

modulation and coding schemes (MCS) of scheduled resource blocks;
antenna port indication information of scheduled resource blocks; or,
resource indication information of scheduled resource blocks.

The present disclosure also provides an information transmission device, which is applied to a terminal device and includes:

a determination unit, configured to determine configuration information for at least two resource blocks; and
a first reception unit, configured to receive scheduling information transmitted by a network device, where the scheduling information is used to indicate the terminal device to perform data transmission and/or reception on at least part of resources of the at least two resource blocks based on the configuration information;
the at least two resource blocks belong to one cell or one bandwidth part, and the resource block includes at least one of: a frequency domain resource block, a time domain resource block, a code domain resource block, or a spatial domain resource block.

The present disclosure also provides an information transmission device, which is applied to a network device and includes:

an obtaining unit, used to obtain configuration information for at least two resource blocks; and
a transmission unit, configured to transmit scheduling information to a terminal device, where the scheduling information is used to indicate a terminal device to perform data transmission and/or reception on at least part of resources of the at least two resource blocks based on the configuration information;
the at least two resource blocks belong to one cell or one bandwidth part, and the resource block includes at least one of: a frequency domain resource block, a time domain resource block, a code domain resource block, or a spatial domain resource block.

The embodiments of the present disclosure further provide a processor readable storage medium, having a computer program stored thereon, and the computer program is used to cause a processor to perform the information transmission method described above.

The beneficial effects of the present disclosure are as follows.

In the above methods, the configuration information and/or the scheduling information for the at least two resource blocks belonging to one cell or one bandwidth part sent by the network device are received, which enables a transmission or reception device with the processing capability corresponding to one cell or one bandwidth part to send or receive information of at least two resource blocks. In this way, resource configuration and scheduling in the SCOMX scenario can be achieved, and the throughput of data transmission can be improved for the terminal.

**BRIEF DESCRIPTION OF THE DRAWINGS**

To better clarify technical solutions of embodiments of this application or in the conventional technologies, drawings used in descriptions of the embodiments or in the conventional technologies are briefly introduced hereinafter. Apparently, the described drawings merely illustrate some embodiments of this application. A person ordinary skilled in the art can obtain other drawings based on these drawings without any creative efforts.

FIG. 1 is a structural diagram of a network system applicable to embodiments of the present disclosure;
FIG. 2 is a schematic diagram of BWP distribution;
FIG. 3 is a first flow chart of an information transmission method according to embodiments of the present disclosure;
FIG. 4 is a schematic diagram of a SCOMX cell;
FIG. 5 is a schematic diagram of a reception process of a SCOMX;
FIG. 6 is a second flow chart of an information transmission method according to embodiments of the present disclosure;
FIG. 7 is a first schematic diagram of units of an information transmission device according to embodiments of the present disclosure;
FIG. 8 is a structural diagram of a terminal device according to embodiments of the present disclosure;
FIG. 9 is a second schematic diagram of units of an information transmission device according to embodiments of the present disclosure; and
FIG. 10 is a structural diagram of a network device according to embodiments of the present disclosure.

## DETAILED DESCRIPTION

The technical solutions in embodiments of this application are described clearly and completely in conjunction with drawings in the embodiments of this application. Apparently, the described embodiments are merely a part of rather than all the embodiments of this application. All other embodiments obtained by a person ordinary skilled in the art based on the embodiments of this application without any creative efforts fall within the protection scope of this application.

Terms such as "first" and "second" in the specification and the claims of this application are used to distinguish similar objects and are not necessarily used to describe a specific order or sequence. It should be understood that the terms used in this way may be interchanged under appropriate circumstances, so that the embodiments of this application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

The term "and/or" in the embodiments of this application describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it. The term "multiple" in the embodiments of this application refers to two or more than two, and other words for expressing quantities are similar to it.

In embodiments of this application, the expressions such as "exemplary" or "for example" are used to indicate an example, illustration, or description. Any embodiment or design solution described as "exemplary" or "for example" in the embodiments of this application should not be construed as being preferred or advantageous over other embodiments or design solutions. Rather, the use of the expressions such as "exemplary" or "for example" is intended to present the relevant concepts in a specific manner.

Embodiments of this application are described hereinafter in connection with the drawings. The information transmission method, the information transmission device, the terminal device, and the network device according to embodiments of this application may be applied to a radio communication system. The radio communication system may be a system employing a fifth generation (5th Generation, 5G) mobile communication technology (hereinafter referred to as a 5G system), and it can be understood by those skilled in the art that the 5G NR system is only an example and is not a limitation.

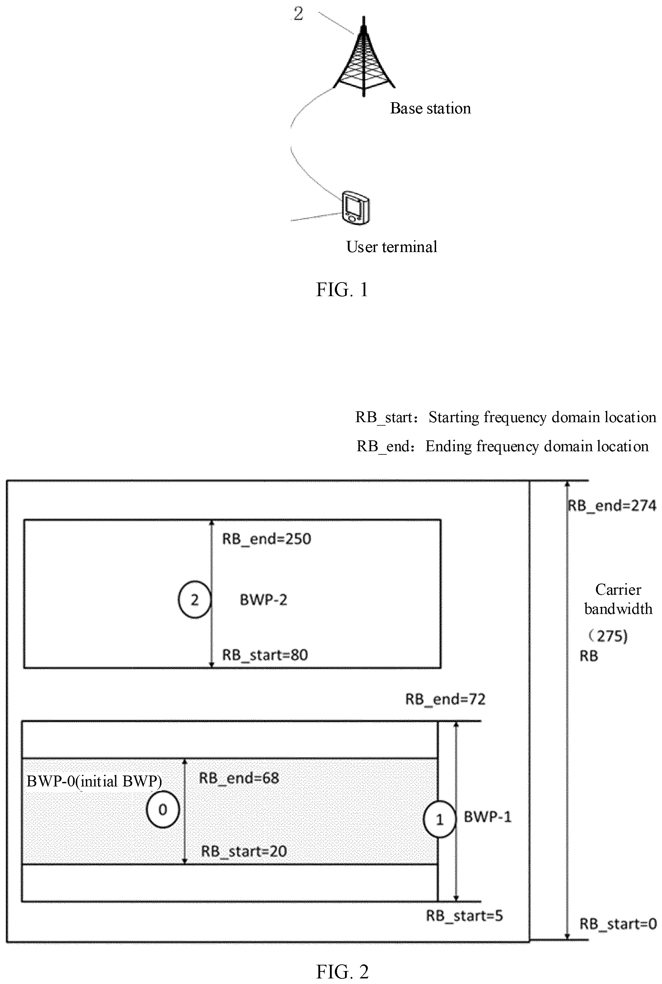

Reference is made to FIG. 1. FIG. 1 is a structural diagram of a network system to which embodiments of this application may be applied. As shown in FIG. 1, the network system includes a user terminal 11 and a network device 12, the user terminal 11 may be a user equipment (User Equipment, UE). For example, it may be a cellular phone, a tablet personal computer (Tablet Personal Computer), a laptop computer (Laptop Computer), a personal digital assistant (personal digital assistant, PDA), a mobile Internet device (Mobile Internet Device, MID), or a wearable device (Wearable Device) or other terminal-side devices. It should be noted that in the embodiments of this application, the specific type of the user terminal 11 is not limited in the embodiments of this application. The above-mentioned network device 12 may be a network device of 5G or of a later version (e.g., Evolved Node B (gNB, also known as base station, network device), 5G NR NB), or a network device in other communication systems, or referred to as a node B. It should be noted that in the embodiments of this application, a 5G network device is only taken as an example, and the specific type of the network device 12 is not limited.

First, based on the technical solutions provided by the present disclosure, some technical terms that may be involved are introduced.

1. Concept of SCOMX

In the current design of New Radio (NR), one serving cell corresponds to one carrier, or in other words, there is a one-to-one correspondence between serving cells and carriers. (It should be noted that serving cell is a concept for high layer services, and carrier is a concept for physical layer resources. That is, in a case of performing service management, the concept of serving cell is utilized, and in a case of transmitting air interface resources, the concept of carrier is utilized).

When a terminal requires a relatively high service transmission rate, a typical manner is to adopt a carrier aggregation (CA) method. The technical feature of CA is that each aggregated carrier corresponds to a serving cell. For example, when CAis 4-carrier aggregation, there are 4 serving cells from the perspective of high layer service management. However, multi-carrier aggregation technology requires terminals to provide strong capabilities, that is, reception capabilities for multiple serving cells/multiple carriers are required, and common signaling overhead is relatively large, as detailed below.

1. In terms of Layer 2 (L2) and Layer 3 (L3), configuration and management are performed based on each cell

For mobility management radio resource management (RRM), configuration, management, measurement and reporting of measurement signals are performed for each cell.

For scheduling algorithm and buffer management, operations are performed independently for each cell.

For transmission of Synchronization Signals and Physical Broadcast Channel Block (SS/PBCH Block, SSB), Remaining Minimum SI (RMSI), System Information Block (SIB), and Paging, in order to randomize initial access load to different cells, operation may be performed by the network device separately for each cell.

2. In terms of Layer 1 (L1), the quantity of component carriers (CCs) supported by CA is an important capability parameter (e.g., if there are N component carriers in CA, the terminal needs to be able to receive data from N carriers at the same time)

One piece of scheduling signaling downlink control information (DCI) only schedules data on one carrier.

Physical downlink control channel (PDCCH) detection capability is related to the quantity of CCs (when N is less than or equal to 4, the capability to detect N cells needs to be supported).

Physical downlink shared channel (PDSCH) reception requires N sets of demodulators and decoders that can execute in parallel.

Hybrid Automatic Repeat Request (HARQ) buffer merging requires N sets of independent soft bit storage buffers.

3. In terms of performance & efficiency

In order to randomize initial access load to different cells, the network device needs to transmit a SSB, RMSI, a SIB, Paging or other messages for each carrier, resulting in excessive common message overhead.

For cell activation and deactivation: the current protocol supports activating and deactivating a carrier based on service requirements, however, a delay of at least 3ms is needed, which reduces user experience.

For configuration of Type-1 HARQ codebook, each CC needs to perform a Hybrid Automatic Repeat Request Acknowledgement (HARQ-ACK) (regardless of whether the cell is activated or deactivated).

Some frequency bands that are smaller than the SSB bandwidth are relatively difficult to use.

The retransmission of a transport block (TB) needs to be restricted to a carrier for the initial transmission, which limits flexibility of scheduling.

Due to the influence of Listen Before Talk (LBT), data transmission on unlicensed spectrums has poor applicability.

In view of the above, the concept of SCOMX is proposed, that is, from the perspective of high layer service management, only one serving cell is managed, while data of this serving cell can be transmitted on multiple carriers, i.e., resources of the physical layer correspond to multiple carriers, and the carriers belonging to one serving cell may be referred to as integrated-carriers.

2. Basic concept of bandwidth part (BWP)

In order to meet the flexible demands of terminals for communication bandwidths (e.g., 5MHz communication bandwidth is required at time t1 and 10MHz communication bandwidth is required at time t2, with the duration between t1 and t2 being tens of milliseconds or hundreds of milliseconds), the concept of BWP is proposed based on carrier. Multiple BWPs may be configured on one carrier (all BWP bandwidths are within the bandwidth range of the carrier). A network device and a terminal may dynamically select a BWP based on the demand of communication for bandwidth, and communicate on the selected BWP. The BWP operation content is described as follows.

The network device configures a quantity of continuous resource blocks (RBs) for the UE, and the scheduling of the services is restricted within the BWP range. When the network device configures a BWP for the terminal, the following parameters need to be determined.

BWP-ID: this parameter identifies an identifier of the configured BWP.

Subcarrier Spacing (SCS): this parameter determines an orthogonal frequency division multiplex (OFDM) symbol length.

Cyclic prefix (CP) type: this parameter is set to extended CP or normal CP.

BWP width indication: this parameter includes a starting location $RB_{start}$ and a length $N_{BWP}^{size}$.

A scenario where a network device configures two BWPs for a specific UE is as shown in FIG. 2.

In the example of FIG. 2, the network device first configures a carrier with a bandwidth of 275 RBs (starting frequency domain location RB_start=0, ending frequency domain location RB_end=274). In this carrier, three BWPs are configured, namely:

BWP-0: The bandwidth is 49 RBs (starting frequency domain location RB_start=20, ending frequency domain location RB_end=68). This BWP is also called the initial BWP. When the terminal is in an idle state, it receives, on this BWP, access information and a paging message transmitted by the network device. When the UE enters a connected state, it may receive unicast services on this BWP.

BWP-1: The bandwidth is 68 RBs (starting frequency domain location RB_start=5, ending frequency domain location RB_end=72). This BWP is a special BWP configured by the network device for the UE, which is used to transmit special services, such as high-rate services.

BWP-2: The bandwidth is 181 RBs (starting frequency domain location RB_start=80, ending frequency domain location RB_end=250). This BWP is a special BWP configured by the network device for the UE, which is used to transmit special services, such as higher-rate services.

Therefore, the SCOMX technology described above refers to a technology where the communication transmission object is in units of carrier. When the communication transmission object is in units of BWP, the technology may be described as data of a serving cell being carried on multiple BWPs, where each BWP corresponds to partial bandwidth on a carrier.

As for SCOMX, it is currently only in the conceptual stage and there is no further implementation.

Based on the analysis, the embodiments of the present disclosure provide an information transmission method, an information transmission device, a terminal device and a network device, to achieve resource configuration and/or scheduling in a SCOMX scenario.

Methods and devices are based on the same application concept. Since the principles of solving problems in methods and devices are similar, for implementations of the devices and the methods, reference can be made to each other, the repetition of which is not described again herein.

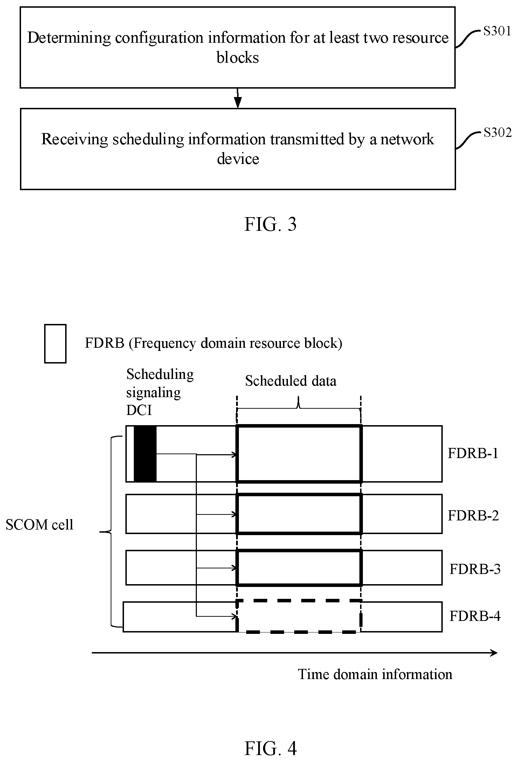

As shown in FIG. 3, embodiments of the present disclosure provide an information transmission method, which is performed by a terminal device and includes following steps.

Step S301: determining configuration information for at least two resource blocks.

It should be noted that the configuration information for the at least two resource blocks may be agreed upon by a protocol, or may be configured by a network device, i.e., it is transmitted by the network device to the terminal device.

Step S302: receiving scheduling information transmitted by a network device, where the scheduling information is used to indicate the terminal device to perform data transmission and/or reception on at least part of resources of the at least two resource blocks based on the configuration information.

The at least two resource blocks belong to one cell or one bandwidth part, and the resource block includes at least one of: a frequency domain resource block, a time domain resource block, a code domain resource block, or a spatial domain resource block.

It should be noted that each resource block in the embodiments of the present disclosure corresponds to one frequency point. Generally, the frequency points corresponding to different resource blocks may be the same or different, thereby achieving multi-frequency transmission in a cell or a bandwidth part.

It should also be noted that the network device usually needs to notify the terminal of the configuration information for the at least two resource blocks first, and then transmits the scheduling information of the resource blocks to the terminal during actual scheduling, to achieve information transmission.

For example, a case where a resource block includes a frequency domain resource block is taken as an example. Multiple carriers belonging to one serving cell may be referred to as carriers or partial carrier bandwidths, which may be collectively referred to as frequency domain resource blocks (FDRB) in this application. In the embodiments of the present disclosure, SCOMX is described as: a cell that includes multiple non-overlapping FDRBs. Reference is made to FIG. 4.

Different FDRBs may belong to a same band or may belong to different bands; or, they may belong to band(s) of an licensed spectrum (also called non-shared spectrum) or may belong to band(s) of an unlicensed spectrum (also called shared spectrum); they may belong to a licensed spectrum of the current operator or may belong to a licensed spectrum of other operators (that is, different operators share licensed spectrum with each other).

Further, in a case that the resource blocks are frequency domain resources of different carriers at the same frequency point, the resource blocks may be referred to as integrated-carriers of a cell, or integrated-BWPs of a BWP; in a case that the resource blocks are frequency domain resources at different frequency points, the resource blocks may be referred to as integrated-bands of a cell, or integrated-BWPs of a BWP.

The frequency domain resources at different frequency points may either belong to licensed spectrum (also called non-shared spectrum) or belong to unlicensed spectrum (also called shared spectrum).

Optionally, in another embodiment of the present disclosure, the at least two resource blocks satisfy at least one of the following:

A11, a sum of resource quantities of the at least two resource blocks is less than or equal to a preset resource quantity threshold.

Optionally, the preset resource quantity threshold is a maximum value configured for one carrier or one bandwidth part; it can be understood that a sum of resource quantities of resource blocks configured for one carrier or one bandwidth part needs to be less than or equal to the maximum value configured for one carrier or one bandwidth part; for example, a case where the resource blocks are frequency domain resource blocks is taken as an example, and the preset resource quantity threshold may be 275 physical resource blocks (PRBs).

A12, the at least two resource blocks do not overlap with each other.

This situation may be understood as that the resources occupied by different resource blocks are non-overlapping. For example, a case where the resource blocks are frequency domain resource blocks is taken as an example, and this situation may be understood as that the frequency domain spacing between the frequency domain resource blocks is at least 1 PRB.

Optionally, in another embodiment of the present disclosure, the resource block satisfies at least one of the following:

A21, belonging to a licensed spectrum;
A22, belonging to an unlicensed spectrum.

Optionally, in another embodiment of the present disclosure, the configuration information includes at least one of the following:

B11, a resource starting location.

For example, in a case that the resource block is a frequency domain resource block, the resource starting location is a frequency domain starting location; in a case that the resource block is a time domain resource block, the resource starting location is a time domain starting location; in a case that the resource block is a code domain resource block, the resource starting location is a code domain starting location; in a case that the resource block is a spatial domain resource block, the resource starting location is a spatial domain starting location.

B12, a resource width.

For example, in a case that the resource block is a frequency domain resource block, the resource width is a frequency domain width; in a case that the resource block is a time domain resource block, the resource width is a time domain width; in a case that the resource block is a code domain resource block, the resource width is a code domain width; in a case that the resource block is a spatial domain resource block, the resource width is a spatial domain width.

B13, frequency point information.

The frequency point information may also be understood as band information.

Further, optionally, the configuration information may also include at least one of the following:

B21, a subcarrier spacing (SCS);
B22, a cyclic prefix (CP) type.

Optionally, it should also be noted that a common message of the serving cell is transmitted via a target resource block, where the target resource block is one of the at least two resource blocks. This situation can be understood as: the resource block for transmitting the common message of the serving cell and the resource block for transmitting the data information are different resources, that is, the common message and the data information of the serving cell are transmitted on different resource blocks.

It should be noted that in a case that the at least two resource blocks belong to one cell, the resource blocks may correspond to the concept of carrier, and in a case that the at least two resource blocks belong to one BWP, the resource blocks may correspond to the concept of partial carrier bandwidth. FDRBs in the frequency domain are taken as an example, and the specific configuration process of the present disclosure is described in detail as follows with examples of carrier and BWP.

Application scenario 1: configuring multiple partial carrier bandwidths in one BWP

This application scenario is based on the current NR BWP framework, and multiple frequency domain resource blocks FDRBs (expressed using integrated-BWPs) are defined in the BWP, where each integrated-BWP contains: a frequency domain starting location, a frequency domain width (such as the quantity of PRBs), and frequency point information. The relevant frequency domain resources may belong to a licensed spectrum or an unlicensed spectrum. The sum of the quantities of all configured frequency domain resource blocks FDRBs does not exceed a preset resource quantity threshold PRB_X (for example, PRB_X=275 or 273), and the preset resource quantity threshold is the maximum quantity of PRBs configured in one BWP. That is, the maximum quantity of PRBs configured for each FDRB is PRB_X, and the sum of PRBs configured for all FDRBs does not exceed PRB_X.

The advantage of this manner is that multiple data receptions or transmissions of the SCOMX cell can be processed by using the terminal processing capability unit of one cell or BWP.

The configuration process may be as follows:

BWP downlink common configuration BWP-DownlinkCommon::= SEQUENCE {

generic parameter configuration genericParameters BWP (including frequency domain information: frequency domain starting location);

control channel configuration pdcch-ConfigCommon SetupRelease{ PDCCH-ConfigCommon };

data channel configuration pdsch-ConfigCommon SetupRelease { PDSCH-ConfigCommon };

FDRBParameters-SCOMX integrated-BWP-list (each list contains one or more frequency domain resource blocks FDRBs);

}

Each integrated-BWP-list contains one or more configurations of integrated-BWP as follows.

integrated-BWP::= SEQUENCE{

FDRB identification FDRB-id FDRB-id (identify FDRB index);

frequency domain information of FDRB locationAndBandwidth INTEGER (0..37949), (parameters include: frequency domain starting location, frequency domain width);

subcarrierSpacing SubcarrierSpacing (parameter is subcarrier spacing);

CP type cyclicPrefix ENUMERATED{ extended } (parameter is CP type, such as extended CP or normal CP);

frequency information of FDRB FrequencyInfoDL-FDRB FrequencyInfoDL.

The following is an explanation of multiple FDRB parameter configurations.

1. In integrated-BWP, the configured subcarrier spacing and CP type are optional. If these parameter are not configured, parameters configured by the generic parameter configuration genericParameters are utilized, or, configuration parameters of other FDRB are utilized (for example, if the subcarrier spacing and the CP type of FDRB1 are not configured, the configuration parameters corresponding to a FDRB whose FDRB identifier is smaller than and closest to FDRB1 may be utilized, or the configuration parameters corresponding to a FDRB whose FDRB identifier is greater than and closest to FDRB1 may be utilized).

2. In integrated-BWP, the frequency point information of the FDRB is configured. If this parameter is not configured, the frequency information configured for the current serving cell (or carrier) is utilized, or the configuration parameter of other FDRB is utilized (for example, if the frequency point information of FDRB2 is not configured, the configuration parameter corresponding to a FDRB whose FDRB identifier is smaller than and closest to FDRB2 may be utilized, or the configuration parameter corresponding to a FDRB whose FDRB identifier is larger than and closest to FDRB2 may be utilized).

3. The configured frequency point information of the FDRB FrequencyInfoDL-FDRB may belong to a licensed spectrum (non-shared spectrum), or may belong to an unlicensed spectrum (shared spectrum), or may belong to a licensed spectrum of other operators.

4. The configured FrequencyInfoDL-FDRB may contain the following information:

frequency band information frequencyBandList MultiFrequencyBandListNR;
common starting point information absoluteFrequencyPointA ARFCN-ValueNR (used to calculate the common starting information with PRB index 0).

5. The above configuration example is for the BWP common configuration BWP-DownlinkCommon of the downlink of the cell. The relevant method can also be applied to the BWP common configuration BWP-UplinkCommon of the uplink of the cell.

It should be further noted that the frequency domain information of the BWP in the generic parameter configuration genericParameters may be referred to as the first FDRB (or the main FDRB), and the common message of the related serving cell (such as paging message, DCI scheduling information, system broadcast information) is transmitted on the first FDRB. One or more pieces of frequency domain information configured by FDRBParameters-SCOMX may be referred to as the second FDRB (or the secondary FDRB), which is only used for receiving data information and reference information related to the data information. The common message of the serving cell is not transmitted on the second FDRB.

Advantages of this application scenario is that: based on the current NR BWP framework, multiple FDRBs are configured in one BWP, to reduce the impact on existing protocols. In addition, in a case that the network device configures multiple BWPs for one a cell, different FDRBs may be configured in different BWPs. If the network device activates a different BWP for data transmission, the FDRBs associated with the BWP are also switched accordingly.

Application scenario 2: configuring multiple carriers in one cell

This application scenario is based on the cell configuration framework, that is, in a serving cell, multiple carriers are defined, and each carrier is equivalent to a domain resource block FDRB (expressed as integrated-carrier), where each integrated-carrier includes: a frequency domain starting location, a frequency domain width (such as the quantity of PRBs), and frequency point information. The relevant frequency domain resources may belong to licensed spectrum or unlicensed spectrum. The sum of the quantities of all configured frequency domain resource blocks FDRBs does not exceed a preset resource quantity threshold PRB_X (for example, PRB_X=275 or 273), and the preset resource quantity threshold is the maximum quantity of PRBs configured in one carrier. That is, the maximum quantity of PRBs configured for each FDB is PRB_X, and the sum of PRBs configured for all FDBs does not exceed PRB_X.

The configuration process may be as follows:

configured serving cell information ServingCellConfigCommon ::= SEQUENCE {

cell physical identifier physCellId PhysCellId;

configured cell downlink parameter downlinkConfigCommon DownlinkConfigCommon (including frequency point, frequency domain starting location, bandwidth) configured cell uplink parameter uplinkConfigCommon UplinkConfigCommon (including frequency point, frequency domain starting location, bandwidth);

configured downlink parameter of cell FDRB: downlinkConfigCommon DownlinkConfigCommonintegrated-carrier-list, where each list contains information about multiple FDRBs (including frequency point, frequency domain start location, bandwidth);
configured uplink parameter of cell FDRB UplinkConfigCommon DownlinkConfigCommonintegrated-carrier, where multiple pieces of FDRB information are configured (including frequency point, frequency domain starting location, bandwidth).

Each DownlinkConfigCommonintegrated-carrier-list contains one or more configuration items of the following DownlinkConfigCommonintegrated-carrier

DownlinkConfigCommonintegrated-carrier ::= SEQUENCE {

FDRB identification FDRB-id FDRB-id (identify FDRB index);

frequency information configuration frequencyInfoDL FrequencyInfoDL-FDRB (including: band index, starting location information for calculating frequency domain resources, etc.);

frequency domain information of FDRB locationAndBandwidth INTEGER (0..37949), (parameters include: frequency domain starting location, frequency domain width);

subcarrierSpacing SubcarrierSpacing (parameter is subcarrier spacing);

CP type cyclicPrefix ENUMERATED{ extended } (parameter is CP type, such as extended CP or normal CP);

}

The following is an explanation of multiple FDRB parameter configurations.

1. In DownlinkConfigCommonintegrated-carrier, the configured subcarrier spacing and CP type are optional. If these parameters are not configured, parameters configured in the configured cell downlink parameter downlinkConfig-Common are utilized, or carrier parameter configurations corresponding to a FDRB whose FDRB identifier is less than and closest to the FDRB whose spacing and CP type are not configured are utilized.

2. In DownlinkConfigCommonintegrated-carrier, the frequency point information of the FDRB is configured. If this parameter is not configured, the frequency information configured for the current serving cell (or carrier) is utilized, or the parameter configuration corresponding to a FDRB whose FDRB identifier is smaller than and closest to the FDRB whose frequency information is not configured is utilized.

3. The configured frequency point information of the FDRB FrequencyInfoDL-FDRB may belong to a licensed spectrum (non-shared spectrum), or may belong to an unlicensed spectrum (shared spectrum), or may belong to a licensed spectrum of other operators.

4. The configured FrequencyInfoDL-FDRB may contain the following information:

> frequency band information frequencyBandList MultiFrequencyBandListNR;
> common starting point information absoluteFrequencyPointA ARFCN-ValueNR (used to calculate the common starting information with PRB index 0).

5. All FDRBs use the same cell physical identifier physCellId (in the BWP configuration of application scenario 1, different FDRBs use the same cell physical identifier physCellId).

6. The content of the configured uplink parameter of cell FDRB UplinkConfigCommon is similar to that for the downlink, which will not be further described herein.

It should be further noted that the frequency domain information of the configured cell downlink parameter downlinkConfigCommon may be referred to as the first FDRB (or the main FDRB), and the common message of the related serving cell (such as paging message, DCI scheduling information, system broadcast information) is transmitted on the first FDRB. One or more pieces of frequency domain information configured by the configured downlink parameter of the cell FDRB downlinkConfigCommo may be referred to as the second FDRB (or the secondary FDRB), which is only used for receiving data information and reference information related to the data information. The common message is not transmitted on the second FDRB.

Advantages of this application scenario is that: it is based on carrier configuration, and its design does not depend on the current NR structure.

Optionally, in another embodiment of the present disclosure, the scheduling information includes at least one of the following:

> C11, modulation and coding schemes (MCS) of scheduled resource blocks;
> C12, antenna port indication information of scheduled resource block;
> C13, resource indication information of scheduled resource blocks.

Optionally, in another embodiment of the present disclosure, in a case that the scheduling information includes the MCSs of the scheduled resource blocks: in an implementation, the scheduling information includes one MCS indication field, the MCS indication field indicates the MCSs of all scheduled resource blocks, and all scheduled resource blocks have identical modulation orders and code rates; it should be noted that there is a corresponding relationship between the MCS indices and the modulation orders and code rates corresponding to the MCSs, which is usually indicated by an MCS index table, and only one MCS index is indicated in the MCS indication field. The terminal can determine the adopted modulation order and code rate based on the MCS index indicated by the MCS indication field. This situation can be understood as that all resource blocks corresponding to the same MCS index table.

In another implementation, the scheduling information includes at least two MCS indication fields, each MCS indication field correspondingly indicates the MCS of one scheduled resource block, and different resource blocks have identical or different modulation orders; this situation may be understood as that in the MCS indication fields, an MCS index is indicated for each resource block, that is, each resource block corresponds to an MCS index table, and the specific parameter values of the MCSs corresponding to different resource blocks may be the same or different.

Optionally, in another embodiment of the present disclosure, in a case that the scheduling information includes the antenna port indication information of the scheduled resource blocks: in an implementation, the scheduling information includes one antenna port indication field, the antenna port indication field indicates antenna port configuration parameters of all scheduled resource blocks, and the antenna port configuration parameters of all scheduled resource blocks are the same; it should be noted that there is a corresponding relationship between the antenna port indices and the antenna port configuration parameters, which is usually indicated by an antenna port indication table. Only one index is indicated in the antenna port indication field. The terminal can determine the antenna port configuration parameter based on the index indicated by the antenna port indication field. This situation may be understood as that all resource blocks corresponding to the same antenna port indication table.

In another implementation, the scheduling information includes at least two antenna port indication fields, each antenna port indication field correspondingly indicates an antenna port configuration parameter of one scheduled resource block, and the antenna port configuration parameters of different resource blocks are the same or different; this situation may be understood as that in the antenna port indication fields, an index is indicated for each resource block, that is, all resource blocks correspond to different antenna port indication tables, and the specific parameter values of the antenna port indication tables corresponding to different resource blocks may be the same or different.

It should also be noted that the antenna port configuration parameter includes at least one of the following:

a quantity of demodulation reference signal (DMRS) CDM groups without data;
a DMRS port index; or,
a rank value for data transmission.

It should be noted that, the frequency domain is taken as an example, and the specific configuration process of the present disclosure is described in detail as follows with examples of whether the resource blocks have the same modulation orders and/or ranks.

Application scenario 3: all the resource blocks have the same modulation orders and ranks

For data scheduling, the network device indicates the following two parameters to the terminal, which are used by the terminal to determine the data transmission or data format. The two parameters are as follows.

Parameter 1: MCS

It should be noted that the MCS is used to indicate the modulation order $Q_m$ and the code rate R used for transmitting data, as shown in Table 1.

Table 1 MCS index table

| MCS index value $I_{MCS}$ | modulation order $Q_m$ | target code rate $R$ x [1024] | spectrum efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |

(continued)

| MCS index value $I_{MCS}$ | modulation order $Q_m$ | target code rate $R$ x [1024] | spectrum efficiency |
|---|---|---|---|
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

In the scheduling information, the MCS index value $I_{MCS}$ in the table is indicated, for example, $I_{MCS}$=0 represents the modulation order $Q_m$=2, and the target code rate R=120/1024.

In a case that a SCOMX cell is configured for the terminal, there are two manners to indicate the same $Q_m$ for multiple FDRBs, namely:

Manner 1: multiple FDRBs share one MCS indication field. In this case, the code rates R and modulation orders $Q_m$ of the multiple FDRBs are the same.

Specifically: in the scheduling information DCI, one MCS indication field is used, and the MCS indication field indicates the MCSs of multiple FDRBs. In this case, the code rates R and modulation orders $Q_m$ of all scheduled FDRBs are the same. For example, when the MCS index value is 28, for all scheduled FDRBs: $Q_m$ =6 and R=948/1024.

Manner 2: multiple MCS indication fields are used to indicate multiple MCS values. In this case, the code rates R of multiple FDRBs may be different, and the modulation orders $Q_m$ are the same.

Specifically, in the scheduling information DCI, more than two MCS indication fields are used to indicate the modulation and coding schemes of multiple resource blocks. In this case, the code rates R of different scheduled FDRBs may be different, but the modulation orders $Q_m$ are the same; that is, for multiple scheduled FDRBs in a SCOMX cell, the terminal hopes that the indicated $Q_m$ are the same.

In addition, in a case that multiple MCS indication fields are indicated, the MCS index table contents corresponding to the various MCS indication fields may be different (i.e., each FDRB corresponds to a different MCS index table). Even if the same index is used, the indicated code rates R may be different.

Parameter 2: antenna port indication

The antenna port indication is used to indicate the dedicated DMRS configuration information used for transmitting data and the value of the rank (or layer value) of the transmitted data. The antenna port indication is shown in Table 2.

Table 2 Antenna port indication table

| 1 codeword | | | |
|---|---|---|---|
| index value | number of DMRS CDM group(s) without data | DMRS port(s) | notes |
| 0 | 1 | 0 | Rank =1 |
| 1 | 1 | 1 | Rank =1 |
| 2 | 1 | 0,1 | Rank =2 |
| 3 | 2 | 0 | Rank =1 |
| 4 | 2 | 1 | Rank =1 |
| 5 | 2 | 2 | Rank =1 |

(continued)

| 1 codeword | | | |
|---|---|---|---|
| index value | number of DMRS CDM group(s) without data | DMRS port(s) | notes |
| 6 | 2 | 3 | Rank =1 |
| 7 | 2 | 0,1 | Rank =2 |
| 8 | 2 | 2,3 | Rank =2 |
| 9 | 2 | 0-2 | Rank =3 |
| 10 | 2 | 0-3 | Rank =4 |
| 11 | 2 | 0,2 | Rank =2 |
| 12-15 | Reserved | Reserved | Reserved |

In Table 2, the index value is indicated in the scheduling information DCI, and the value indicates which row of content is used for the current data transmission. The parameter "the number of DMRS CDM group(s) without data" indicates which resource element (RE) locations have no data transmission, and the DMRS port(s) indication information includes two aspects:

1. the adopted DMRS port index;

For example, when the index value is 0, the DMRS port index is 0; when the index value is 2, the DMRS port indices are 0 and 1.

2. layer value;

For example, when the index value is 0, the layer value is 1; when the index value is 2, the layer value is 2.
When a SCOMX cell is configured for the terminal, there are two manners to indicate the same layer value for multiple FDRBs, namely:
Manner 1: multiple resource blocks FDRB share one antenna port indication field. In this case, the numbers of DMRS CDM groups without data and DMRS port indication information of different FDRBs are the same.
Specifically, in the scheduling information DCI, one antenna port indication field is used to indicate the antenna port configurations of multiple FDRBs. In this case, the antenna port configuration parameters of all scheduled FDRBs are the same. If the index value is 11, all scheduled resource blocks FDRB use the following parameters:

the number of DMRS CDM groups without data is 2;
DMRS ports are port 0 and port 2;
the layer value is 2.

Manner 2: multiple antenna port indication fields are used to indicate the antenna port values of multiple FDRBs (the numbers of DMRS CDM groups without data may be different, the DMRS ports may be different, and the layer values are the same).
Specifically, in the scheduling information DCI, more than two antenna port indication fields are used to indicate antenna ports of multiple FDRBs. In this case, the numbers of DMRS CDM groups without data may be different, the DMRS ports may be different, and the layer values may be the same. For example, for a SCOMX cell configured with two FDRBs, two antenna port indication fields are indicated, as follows:
for FDRB-1: the index value is 0; for FDRB-2: the index value is 4:
In this case, the layer values of all FDRBs are 1, and other parameters are different.
In addition, in a case that multiple antenna port indication fields are indicated, the antenna port indication tables corresponding to the various indication fields may be different (i.e., each FDRB corresponds to a different antenna port indication table). Even if the same index is used, the indicated information may be different.
Application scenario 4: the modulation orders and/or rank values of all resource blocks are different
For data scheduling, the network device indicates the following two parameters to the terminal, which are used by the terminal to determine the data transmission or data format. The two parameters are as follows.

Parameter 1: MCS

It should be noted that the MCS is used to indicate the modulation order $Q_m$ and code rate R used for transmitting data. The MCS index table is shown in Table 1.

In the scheduling information, the MCS index value $I_{MCS}$ in the table is indicated, for example, $I_{MCS}=0$ represents that the modulation order is $Q_m=2$, and the target code rate is R=120/1024.

When a SCOMX cell is configured for the terminal, multiple MCS indication fields are used for multiple FDRBs to indicate multiple MCS indices. That is, in the scheduling information DCI, more than 2 MCS indication fields are used to indicate the MCSs of multiple FDRBs. In this case, the code rates R of different scheduled FDRBs may be different, and the modulation orders $Q_m$ may also be different.

In addition, in a case that multiple MCS indication fields are indicated, the MCS index table contents corresponding to the various MCS indication fields may be different (i.e., each FDRB corresponds to a different MCS index table), that is, even if the same index is used, the indicated code rates R and $Q_m$ may be different.

Parameter 2: antenna port indication

The antenna port indication is used to indicate the dedicated DMRS configuration information used for transmitting data and the value of the rank (or layer value) for transmitting data. The antenna port indication is shown in Table 2.

In Table 2, the index value is indicated in the scheduling information DCI indication, and the index value indicates which row of content is used for the current data transmission. The parameter "the number of DMRS code group(s) without data" indicates which RE locations have no data transmission. The DMRS port(s) indication information includes two aspects:

1. the adopted DMRS port index;

For example, when the index value is 0, the DMRS port index is 0; when the index value is 2, the DMRS port indices are 0 and 1.

2. layer value;

For example, when the index value is 0, the layer value is 1; when the index value is 2, the layer value is 2.

When a SCOMX cell is configured for the terminal, multiple antenna port indication fields are used for multiple FDRBs to indicate multiple antenna port values (the numbers of DMRS CDM groups without data may be different, the DMRS ports may be different, and the layer values may be the same). In the scheduling information DCI, two or more antenna port indication fields are used to indicate antenna ports of multiple resource blocks. In this case, the numbers of DMRS CDM groups without data may be different, the DMRS ports may be different, and the layer values may also be different.

In addition, in a case that multiple antenna port indication fields are indicated, the antenna port indication tables corresponding to the various indication fields may be different (i.e., each FDRB corresponds to a different antenna port indication table), and even if the same index is used, the indicated information may be different.

Optionally, in another embodiment of the present disclosure, a specific implementation of receiving the scheduling information for the at least two resource blocks transmitted by the network device includes:

receiving, via a reception module corresponding to X target objects, Y resource blocks transmitted by the network device;

X and Y are positive integers greater than or equal to 1, X is less than Y, the target object includes: a cell, a carrier or a bandwidth part, and reception module includes: a channel estimation module, a quadrature amplitude modulation (QAM) demapping module and a channel decoding module.

It should be noted that for the SCOMX cell, from the perspective of baseband processing on the terminal side, the terminal may use only one carrier processing unit to receive and process all integrated-carriers (receive and process data transmitted on two or more resource blocks), and the relevant carrier processing unit includes at least one of the following modules:

Fast Fourier Transform (FFT) processing module: this module converts frequency domain signals into time domain signals, or converts time domain signals into frequency domain information. Its processing capability may support a maximum of 4096 FFT points for one carrier. This FFT processing module is adopted to process signal data of all integrated-carriers.

Demapping module (i.e., QAM demapping module): this module is used to move, from the entire radio resources, signal data transmitted to the terminal, for processing by a candidate module.

Channel estimation module: this module is used to estimate the characteristics of the radio channel for the subsequent data demodulation (or QAM demapping) process. Its processing capability may support a maximum of 275 (or 273) PRBs of data for one carrier. This channel estimation module is used to process the channel estimation work of all integrated-carriers.

Channel demodulation/decoding module: this module converts the complex signal into a data bit stream and recovers the data information transmitted by the transmitter. Its processing capability may support demodulation and channel decoding for a maximum of 275 (or 273) PRBs for one carrier; this demodulation/decoding module is used to process the data demodulation and channel decoding processes of all integrated-carriers.

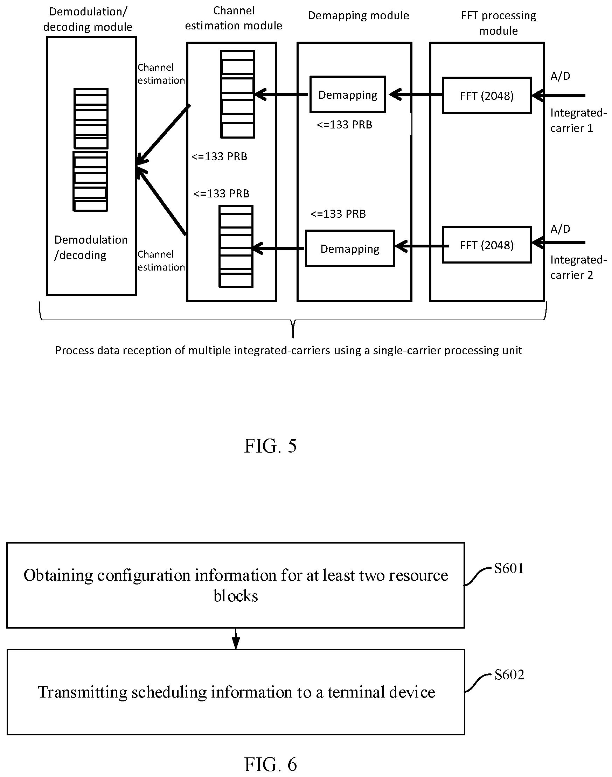

It should be noted that in a case that the terminal uses the processing capacity of one carrier to receive multiple integrated-carriers (data transmitted on two or more resource blocks), it is required that the quantity of resources configured for all integrated-carriers does not exceed the maximum processing resource quantity of a single carrier. For example, in a case that the maximum threshold of PRBs processed by a single carrier is 275 (or 273) PRBs, the sum of the quantities of PRBs configured for all integrated-carriers is less than or equal to 275 (or 273) PRBs. Specifically, the reception process of the SCOMX is shown in FIG. 5.

It should be noted that, whether the SCOMX cell can use the processing capacity of one carrier to receive data on multiple integrated-carriers, the quantity of integrated-carriers that can be processed by using the reception processor corresponding to one carrier, and the total quantity of radio resources, may be reported based on UE capabilities. The information reported by the terminal may be as follows.

Example 1: supported SCOMX cells, including: the quantity of integrated-carriers, the sum of the quantities of PRBs of all integrated-carriers.

Example 2: supported SCOMX cells, including: different frequency points combinations of integrated-carriers (which frequencies points constitute an SCOMX cell), the quantity of integrated-carriers, the sum of the quantities of PRBs of all integrated-carriers.

Optionally, the terminal may use reception processors corresponding to at least two carriers (such as X) to receive data of more than two resource blocks (such as Y) in the SCOMX cell, where X is less than Y.

Optionally, in another embodiment of the present disclosure, the resource indication information of the resource blocks includes frequency domain indication information, and bits occupied by the frequency domain indication information are determined based on a bandwidth of a configured target resource block;

the target resource block includes: a resource block belonging to a licensed spectrum; or

the target resource block includes: a resource block belonging to a licensed spectrum and a resource block belonging to an unlicensed spectrum.

Optionally, in another embodiment of the present disclosure, in a case that a scheduled resource block belongs to an unlicensed spectrum, the scheduling information further includes: an unlicensed spectrum data transmission indicator; the unlicensed spectrum data transmission indicator is used to indicate that the network device confirms a transmission or the network device does not confirm a transmission.

For example, when the unlicensed spectrum data transmission indicator is 1, it indicates that the network device confirms the transmission, and when the unlicensed spectrum data transmission indicator is 0, it indicates that the network device does not confirm the transmission; or, when the unlicensed spectrum data transmission indicator is 0, it indicates that the network device confirms the transmission, and when the unlicensed spectrum data transmission indicator is 1, it indicates that the network device does not confirm the transmission.

It should be noted that, in a case that the scheduling information includes the unlicensed spectrum data transmission indicator, the target resource block may only include a resource block belonging to a licensed spectrum so as to save signaling overhead.

For example, when the unlicensed spectrum data transmission indicator is 0, the terminal further determines whether the network device has transmitted data on the unlicensed FDRB. If it is determined that data has been transmitted, the terminal receives the corresponding data. The determination manner is as follows.

Manner A: Detection of the dedicated DMRS for scheduling data is performed. If the dedicated DMRS is detected by the terminal, the terminal determines that the network device has transmitted the corresponding data.

Manner B: The network device sends indication information (such as sending a control channel) at a predetermined location of the scheduling resource. In a case that the indication information is detected by the terminal, the terminal determines that the network device has transmitted the corresponding data.

Optionally, the unlicensed spectrum data transmission indicator indicated in the DCI may be directly replaced by manner A or B in the above.

The above embodiments are explained in detail as follows.

Application scenario 5

For a SCOMX cell, in a case that the configured FDRBs belong to an unlicensed spectrum (one or more shared frequency domain resources), the scheduling information DCI includes an unlicensed spectrum data transmission indicator, the unlicensed spectrum data transmission indicator indicates whether the frequency domain resources of the shared spectrum have scheduled data in the current scheduling. In the following, a case where among the four frequency domain resources FDRBs configured in a SCOMX cell, one FDRB is a shared frequency domain resource and three FDRBs are licensed frequency domain resources (also called non-shared frequency domain resources) is taken as an example for description.

Configuration information of the SCOMX cell

For example, based on the configuration stage of FDRBs, the configuration information for multiple FDRBs configured in the SCOMX cell is shown in Table 3.

Table 3 Configuration information of SCOMX cell

| FDRB index | spectrum type | frequency domain bandwidth (quantity of PRBs) | subcarrier spacing | band index | notes |
|---|---|---|---|---|---|
| 0 | licensed spectrum | 80 | 15KHz | band 1 | quantity of PRBs does not exceed PRB_X |
| 1 | licensed spectrum | 70 | 15KHz | band 1 | quantity of PRBs does not exceed PRB_X |
| 2 | licensed spectrum | 60 | 15KHz | band 2 | quantity of PRBs does not exceed PRB_X |
| 3 | unlicensed | 50 | 15KHz | band 3 | quantity of PRBs does not exceed PRB_X |

It should be noted that the quantity of PRBs of any of the above FDRBs cannot exceed PRB_M, and the sum of quantities of PRBs of all FDRBs does not exceed PRB_X. PRB_X may be equal to 275, 274 or 273.

Scheduling information of SCOMX cell

Specifically, the scheduling information of the SCOMX includes the following aspects.

1. Frequency domain indication information (the frequency domain indication information is used to indicate the frequency domain resource assignment (FDRA)), which occupies K bits

Specifically, K is determined by $K = \lceil \mathrm{Log}_2 \ (N_{RB} * (N_{RB} + 1)/2) \rceil$

$N_{RB}$ is the quantity of all PRBs of the FDRBs configured in the SCOMX cell; $\lceil . \rceil$ means rounding up. In a case as shown in Table 3, $N_{RB}$ = 80 + 70 + 60 + 50 = 260. K= $\lceil \mathrm{Log}_2 \ (260 * (260 + 1)/2) \rceil = 16$.

In another case, the resource information of the unlicensed spectrum is not included when calculating $N_{RB}$, that is, $N_{RB}$ = 80 + 70 + 60 = 210.

2. Time domain indication information (the time domain indication information is used to indicate the time domain resource assignment (TDRA)), which occupies J bits

Specifically, the value of J is configured by the network device, such as J=4, 5 or 6.

3. FDRB data transmission-indication-on-shared-spectrum (transmission-indication-on-shared-spectrum), i.e., the unlicensed spectrum data transmission indicator mentioned above

1: indicates that data is transmitted in FDRBs of a shared spectrum;
0: indicates that data is not transmitted in FDRBs of a shared spectrum (or may not be transmitted).

For the terminal side, the scheduling information transmitted by the network device is received, the frequency domain information of the scheduling data is parsed based on the FDRA, and the time domain information of the scheduling data is parsed based on the TDRA. If the frequency domain scheduling information indicated by the FDRA includes PRB(s) (one or more PRBs) of FDRBs of a shared spectrum, the data reception manner is determined based on the FDRB data transmission-indication-on-shared-spectrum:

Manner 1: If the indication is 1 (indicating that data is transmitted in the FDRBs of the shared spectrum), the terminal receives the data scheduled on the FDRBs of the shared spectrum, and demodulates and decodes the data together with data on other licensed spectrum.
Manner 2: If the indication is 0 (indicating that the data is not transmitted on the FDRBs of the shared spectrum, or may not be transmitted), the terminal does not receive the data scheduled on the FDRBs of the shared spectrum, and only demodulates and decodes data on other licensed spectrum. That is, when the terminal performs decoding, the data information on the corresponding shared spectrum is punctured.

It should be noted that, with the FDRB data transmission-indication-on-shared-spectrum, the following beneficial effects can be achieved.

When the transmitter is ready to transmit information on the unlicensed spectrum, it needs to perform a channel sensing process to determine whether the channel is idle. Data may only be transmitted when the transmission node detects that the channel is idle (or the channel sensing is successful). In addition, the standard also stipulates that the process from successful channel sensing to the start of data transmission needs to be completed within 16 microseconds, otherwise the result of the channel sensing will be invalid.

When the network device is to send downlink data, it needs to take time to prepare for sending (i.e., in the duration from determining the transmission resources to starting transmission, channel coding, modulation and other operations are required), and the preparation time is much longer than 16 microseconds (e.g., 1-2 milliseconds). The following situations need to be considered for network devices.

Situation1: before scheduling data, it has been determined that the shared spectrum will not be used (for example, the quality of the shared spectrum channel is poor, or the amount of data to be transmitted is small).

In this case, the frequency domain range indicated by the FDRA field does not include the FDRBs of the unlicensed spectrum, that is, the network device does not schedule data on the shared spectrum. In this case, there is no new impact on the terminal.

Situation 2: before scheduling data, it is determined that the shared spectrum is to be used (e.g., the amount of data to be transmitted is large), the channel sensing is successful, and scheduling data for other terminal is being transmitted on the shared spectrum.

In this case, content indicated by the FDRA field contains the FDRBs of the unlicensed spectrum. In addition, since the data is to be transmitted on the channel whose sensing is successful, the network device has enough time to prepare for data transmission, that is, the network device knows that it can transmit scheduled data on the shared spectrum (the corresponding FDRB data transmission-indication-on-shared-spectrum is 1).

Situation 3: before scheduling data, it is determined that the shared spectrum is to be used (e.g., the amount of data to be transmitted is large), but channel sensing is in progress and it has not yet been determined whether it will be successful.

In this case, content indicated by the FDRA field contains the FDRBs of the unlicensed spectrum, but whether transmission will be performed in the end depends on the result of channel sensing (the corresponding FDRB data transmission-indication-on-shared-spectrum is 0), which is divided into the following two situations.

Situation A: at the data transmission time, channel sensing fails.

Since the sensing actually fails, the network device does not transmit data on the corresponding unlicensed spectrum. The terminal cannot receive data on the unlicensed spectrum according to the indication of the scheduling information (if it receives data, the performance of data demodulating will be degraded due to the useless data received) Situation B: at the data transmission time, channel sensing is successful.

Since the sensing is actually successful, the network device can transmit data on the corresponding unlicensed spectrum. The terminal may receive data on the unlicensed spectrum according to the indication of the scheduling information (if it does not receive the data, the performance of data demodulating may be degraded).

In conclusion, the network device indicates the FDRB data transmission-indication-on-shared-spectrum, which is used by the terminal to determine whether to receive data on the unlicensed spectrum (indicated by the scheduling information), thereby avoiding degradation of data demodulating caused by channel sensing failure.

In summary, embodiments of the present disclosure provides a relatively comprehensive method for configuring SCOMX and scheduling SCOMX, so that the terminal can receive data on multiple carriers with lowered capability requirements; in addition, a relatively high communication rate is obtained, and the user experience is improved, which can be specifically reflected in the following aspects.

By setting the sum of the bandwidths of all resource blocks to be not greater than the preset resource quantity threshold PRB_X, the terminal can use the reception/transmission capability of one cell to process data reception and transmission of multiple carriers.

By introducing the unlicensed spectrum, the communication bandwidth can be effectively increased, thereby improving the communication rate.

The technical solutions in the embodiments of this application may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present application may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device),which is not limited in the embodiments of this application.

The network device involved in the embodiments of the present application may be a network device, and the network device may have multiple cells providing services for terminals. According to different application scenarios, the network device may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of this application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G network device (gNB) in a 5G network architecture (next generation system), or may be a home evolved network device (Home evolved Node B, HeNB),a relay node (relay node), a home network device (femto), a pico (pico), etc., which is not limited in the embodiments of this application. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2-dimension MIMO (2D-MIMO), 3-dimension MIMO (3D-MIMO), full dimension MIMO (FD-MIMO), or massive MIMO (massive-MIMO), or may be diversity transmission, or precoding transmission, or beamforming transmission, etc.

Corresponding to the implementation of the terminal device, as shown in FIG. 6, the embodiments of the present disclosure provide an information transmission method, which is applied to a network device and includes the following steps.

Step S601: obtaining configuration information for at least two resource blocks.

Optionally, in a case that the configuration information for the at least two resource blocks is determined by the network device itself, the network device needs to transmit the configuration information for the at least two resource blocks to the terminal device.

Step S602: transmitting scheduling information to a terminal device, where the scheduling information is used to indicate a terminal device to perform data transmission and/or reception on at least part of resources of the at least two resource blocks based on the configuration information.

The at least two resource blocks belong to one cell or one bandwidth part, and the resource block includes at least one of: a frequency domain resource block, a time domain resource block, a code domain resource block, or a spatial domain resource block.

Optionally, the configuration information includes at least one of the following:

a resource starting location;
a resource width; or,
frequency point information.

Optionally, the configuration information further includes at least one of the following:

a subcarrier spacing (SCS); or,
a cyclic prefix (CP) type.

Optionally, the at least two resource blocks satisfy at least one of:

a sum of resource quantities of the at least two resource blocks is less than or equal to a preset resource quantity threshold; or,
the at least two resource blocks do not overlap with each other.

Optionally, the preset resource quantity threshold is a maximum value configured for one carrier or one bandwidth part.

Optionally, the resource block satisfies at least one of the following:

belonging to a licensed spectrum; or,
belonging to an unlicensed spectrum.

Optionally, a common message of a serving cell is transmitted via a target resource block, and the target resource block is one of the at least two resource blocks.

Optionally, the scheduling information includes at least one of the following:

modulation and coding schemes (MCS) of scheduled resource blocks;
antenna port indication information of scheduled resource blocks; or,
resource indication information of scheduled resource blocks.

Optionally, in a case that the scheduling information includes the MCSs of the scheduled resource blocks:

the scheduling information includes one MCS indication field, the MCS indication field indicates the MCSs of all scheduled resource blocks, and all scheduled resource blocks have identical modulation orders and code rates; or,
the scheduling information includes at least two MCS indication fields, each MCS indication field correspondingly indicates the MCS of one scheduled resource block, and different resource blocks have identical or different modulation orders.

Optionally, in a case that the scheduling information includes the antenna port indication information of the scheduled resource blocks:

the scheduling information includes one antenna port indication field, the antenna port indication field indicates antenna port configuration parameters of all scheduled resource blocks, and the antenna port configuration parameters of all scheduled resource blocks are the same; or,
the scheduling information includes at least two antenna port indication fields, each antenna port indication field correspondingly indicates an antenna port configuration parameter of one scheduled resource block, and the antenna port configuration parameters of different resource blocks are the same or different;
the antenna port configuration parameter includes at least one of the following:

a quantity of demodulation reference signal (DMRS) CDM groups without data;
a DMRS port index; or,
a rank value for data transmission.

Optionally, the resource indication information of the resource blocks includes frequency domain indication information, and bits occupied by the frequency domain indication information are determined based on a bandwidth of a configured target resource block;
the target resource block includes: a resource block belonging to a licensed spectrum; or the target resource block includes: a resource block belonging to a licensed spectrum and a resource block belonging to an unlicensed spectrum.

Optionally, in a case that a scheduled resource block belongs to an unlicensed spectrum, the scheduling information further includes: an unlicensed spectrum data transmission indicator;
the unlicensed spectrum data transmission indicator is used to indicate that the network device confirms a transmission or the network device does not confirm a transmission.

It should be noted that all descriptions about the network device in the above embodiments are applicable to the embodiments of the information transmission method, and same technical effects can be achieved, the repetition of which is not provided herein.

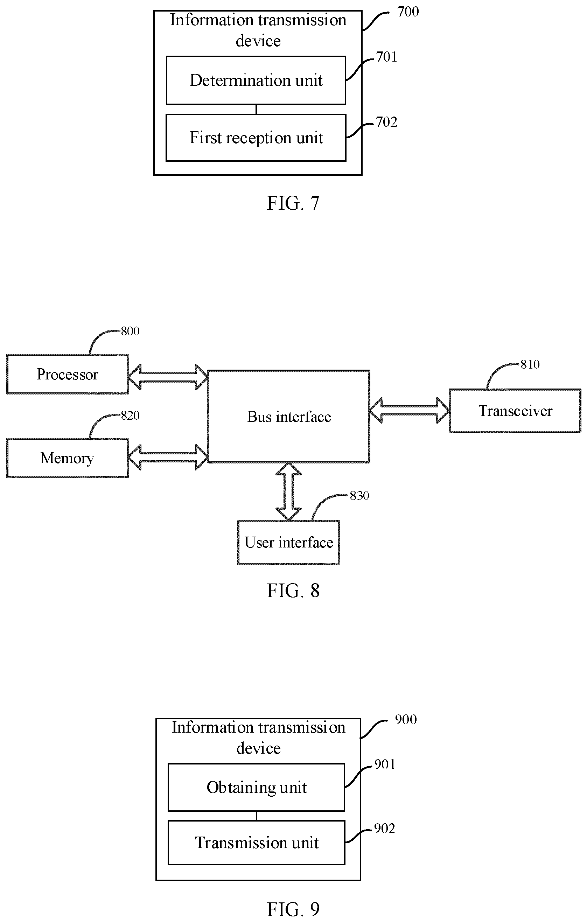

As shown in FIG. 7, embodiments of the present disclosure provide an information transmission device 700, which is applied to a terminal device, including:

a determination unit 701, configured to determine configuration information for at least two resource blocks; and
a first reception unit 702, configured to receive scheduling information transmitted by a network device, where the scheduling information is used to indicate the terminal device to perform data transmission and/or reception on at least part of resources of the at least two resource blocks based on the configuration information;
the at least two resource blocks belong to one cell or one bandwidth part, and the resource block includes at least one of: a frequency domain resource block, a time domain resource block, a code domain resource block, or a spatial domain resource block.

Optionally, the configuration information includes at least one of:

a resource starting location;
a resource width; or,
frequency point information.

Optionally, the at least two resource blocks satisfy at least one of:

a sum of resource quantities of the at least two resource blocks is less than or equal to a preset resource quantity threshold; or,
the at least two resource blocks do not overlap with each other.

Optionally, the preset resource quantity threshold is a maximum value configured for one carrier or one bandwidth part.

Optionally, the resource block satisfies at least one of:

belonging to a licensed spectrum; or,
belonging to an unlicensed spectrum.

Optionally, a common message of a serving cell is transmitted via a target resource block, and the target resource block is one of the at least two resource blocks.

Optionally, the scheduling information includes at least one of:

modulation and coding schemes (MCS) of scheduled resource blocks;
antenna port indication information of scheduled resource blocks; or,
resource indication information of scheduled resource blocks.

Optionally, in a case that the scheduling information includes the MCSs of the scheduled resource blocks:

the scheduling information includes one MCS indication field, the MCS indication field indicates the MCSs of all scheduled resource blocks, and all scheduled resource blocks have identical modulation orders and code rates; or, the scheduling information includes at least two MCS indication fields, each MCS indication field correspondingly indicates the MCS of one scheduled resource block, and different resource blocks have identical or different modulation orders.

Optionally, in a case that the scheduling information includes the antenna port indication information of the scheduled resource blocks:

the scheduling information includes one antenna port indication field, the antenna port indication field indicates antenna port configuration parameters of all scheduled resource blocks, and the antenna port configuration parameters of all scheduled resource blocks are the same; or,
the scheduling information includes at least two antenna port indication fields, each antenna port indication field correspondingly indicates an antenna port configuration parameter of one scheduled resource block, and the antenna port configuration parameters of different resource blocks are the same or different;
the antenna port configuration parameter includes at least one of:

a quantity of demodulation reference signal (DMRS) CDM groups without data;
a DMRS port index; or,
a rank value for data transmission.

Optionally, the resource indication information of the resource blocks includes frequency domain indication information, and bits occupied by the frequency domain indication information are determined based on a bandwidth of a configured target resource block;
the target resource block includes: a resource block belonging to a licensed spectrum; or the target resource block includes: a resource block belonging to a licensed spectrum and a resource block belonging to an unlicensed spectrum.

Optionally, in a case that a scheduled resource block belongs to an unlicensed spectrum, the scheduling information further includes: an unlicensed spectrum data transmission indicator;
the unlicensed spectrum data transmission indicator is used to indicate that the network device confirms a transmission or the network device does not confirm a transmission.

Optionally, the device further includes:

a second reception unit, configured to receive, via a reception module corresponding to X target objects, Y resource blocks transmitted by the network device;
X and Y are positive integers greater than or equal to 1, X is less than Y, the target object includes: a cell, a carrier or a bandwidth part, and reception module includes: a channel estimation module, a quadrature amplitude modulation (QAM) demapping module and a channel decoding module.

It should be noted that the device embodiments are in a one-to-one correspondence with the above method embodiments, all the implementations in the above method embodiments are applicable to the device embodiments, and the same technical effects can be achieved.

It should be noted that the division of units in the embodiments of this application is schematic and only serves as a division of logical functions, and there may be other division methods. In addition, in the embodiments of the present application, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present application, or the part contributing to the conventional technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present application. The storage medium includes a USB flash disk, a mobile hard disk, a read-only memory (Read-Only Memory, ROM), a random access memory (Random Access Memory, RAM), a magnetic disk, an optical disk, or other medium which can store program code.

As shown in FIG. 8, embodiments of the present disclosure further provides a terminal device, including a processor 800, a transceiver 810, a memory 820, and a program stored in the memory 820 and executable by the processor 800. The transceiver 810 is connected to the processor 800 and the memory 820 via a bus interface. The processor 800 is configured to read the program in the memory to perform following process:

determining configuration information for at least two resource blocks; and
receiving, via the transceiver 810, scheduling information transmitted by a network device, where the scheduling information is used to indicate the terminal device to perform data transmission and/or reception on at least part of resources of the at least two resource blocks based on the configuration information;
the at least two resource blocks belong to one cell or one bandwidth part, and the resource block includes at least one of: a frequency domain resource block, a time domain resource block, a code domain resource block, or a spatial domain resource block.

The transceiver 810 is configured to receive and send data under control of the processor 800.

In FIG. 8, a bus architecture may include any quantity of interconnected buses and bridges. Various circuits including one or more processors represented by the processor 800 and a memory represented by the memory 820 are linked. The bus architecture may further link various other circuits together, such as a periphery component, a voltage stabilizer and a power management circuit, which are known in the art and are not further described herein. A bus interface provides an interface. The transceiver 810 may be multiple elements, i.e., including a transmitter and a receiver, providing a unit for communicating with various other devices on transmission media. The transmission media include a wireless channel, a wired channel, an optical cable, or other transmission media. For different user equipments, the user interface 830 may be an interface capable of connecting externally and internally with the required equipment. The connected equipment includes but not limited to a keypad, a display, a speaker, a microphone, a joystick, etc.

The processor 800 is in charge of managing the bus architecture and common processes. The memory 820 may store data used by the processor 800 in performing operations.

Optionally, the processor 800 may be a CPU (Central Processing Device), an ASIC (Application Specific Integrated Circuit), a FPGA (Field Programmable Gate Array), or a CPLD (Complex Programmable Logic Device), or the processor may adopt a multi-core architecture.

The processor is configured to execute any of the methods in the embodiments of the present application according to obtained executable instructions by calling the computer program stored in the memory. The processor and the memory may be physically arranged separately.

Optionally, the configuration information includes at least one of:

a resource starting location;
a resource width; or,
frequency point information.

Optionally, the at least two resource blocks satisfy at least one of:

a sum of resource quantities of the at least two resource blocks is less than or equal to a preset resource quantity threshold; or,
the at least two resource blocks do not overlap with each other.

Optionally, the preset resource quantity threshold is a maximum value configured for one carrier or one bandwidth part.

Optionally, the resource block satisfies at least one of:

belonging to a licensed spectrum; or,
belonging to an unlicensed spectrum.

Optionally, a common message of a serving cell is transmitted via a target resource block, and the target resource block is one of the at least two resource blocks.

Optionally, the scheduling information includes at least one of:

# EP 4 637 240 A1

modulation and coding schemes (MCS) of scheduled resource blocks;
antenna port indication information of scheduled resource blocks; or,
resource indication information of scheduled resource blocks.

Optionally, in a case that the scheduling information includes the MCSs of the scheduled resource blocks:

the scheduling information includes one MCS indication field, the MCS indication field indicates the MCSs of all scheduled resource blocks, and all scheduled resource blocks have identical modulation orders and code rates; or, the scheduling information includes at least two MCS indication fields, each MCS indication field correspondingly indicates the MCS of one scheduled resource block, and different resource blocks have identical or different modulation orders.

Optionally, in a case that the scheduling information includes the antenna port indication information of the scheduled resource blocks:

the scheduling information includes one antenna port indication field, the antenna port indication field indicates antenna port configuration parameters of all scheduled resource blocks, and the antenna port configuration parameters of all scheduled resource blocks are the same; or,
the scheduling information includes at least two antenna port indication fields, each antenna port indication field correspondingly indicates an antenna port configuration parameter of one scheduled resource block, and the antenna port configuration parameters of different resource blocks are the same or different;
the antenna port configuration parameter includes at least one of:

a quantity of demodulation reference signal (DMRS) CDM groups without data;
a DMRS port index; or,
a rank value for data transmission.

Optionally, the resource indication information of the resource blocks includes frequency domain indication information, and bits occupied by the frequency domain indication information are determined based on a bandwidth of a configured target resource block;
the target resource block includes: a resource block belonging to a licensed spectrum; or the target resource block includes: a resource block belonging to a licensed spectrum and a resource block belonging to an unlicensed spectrum.
Optionally, in a case that a scheduled resource block belongs to an unlicensed spectrum, the scheduling information further includes: an unlicensed spectrum data transmission indicator;
the unlicensed spectrum data transmission indicator is used to indicate that the network device confirms a transmission or the network device does not confirm a transmission.
Optionally, the processor is configured to read the computer program in the memory and perform following operation:

receiving, via a reception module corresponding to X target objects, Y resource blocks transmitted by the network device;
X and Y are positive integers greater than or equal to 1, X is less than Y, the target object includes: a cell, a carrier or a bandwidth part, and reception module includes: a channel estimation module, a quadrature amplitude modulation (QAM) demapping module and a channel decoding module.

At least one embodiment of this application also provides a terminal device, including a memory, a processor, and a computer program stored in the memory and executable by the processor, the processor, when executing the program, performs various processes in the embodiments of the information transmission method applied to the terminal device, and same technical effects can be achieved, the repetition of which is not provided herein.
At least one embodiment of this application also provides a computer readable storage medium, having a computer program stored thereon, and the computer program, when being executed by a processor, performs various processes in the embodiments of the information transmission method applied to the terminal device, and same technical effects can be achieved, the repetition of which is not provided herein. The computer readable storage medium may be a read-only memory (Read-Only Memory, ROM), a random access memory (Random Access Memory, RAM), a magnetic disk or an optical disk.
As shown in FIG. 9, embodiments of the present disclosure provide an information transmission device 900, which is applied to a network device, including:

28

an obtaining unit 901, used to obtain configuration information for at least two resource blocks; and

a transmission unit 902, configured to transmit scheduling information to a terminal device, where the scheduling information is used to indicate a terminal device to perform data transmission and/or reception on at least part of resources of the at least two resource blocks based on the configuration information;

the at least two resource blocks belong to one cell or one bandwidth part, and the resource block includes at least one of: a frequency domain resource block, a time domain resource block, a code domain resource block, or a spatial domain resource block.

Optionally, the configuration information includes at least one of:

a resource starting location;
a resource width; or,
frequency point information.

Optionally, the configuration information further includes at least one of:

a subcarrier spacing (SCS); or,
a cyclic prefix (CP) type.

Optionally, the at least two resource blocks satisfy at least one of:

a sum of resource quantities of the at least two resource blocks is less than or equal to a preset resource quantity threshold; or,
the at least two resource blocks do not overlap with each other.

Optionally, the preset resource quantity threshold is a maximum value configured for one carrier or one bandwidth part.

Optionally, the resource block satisfies at least one of:

belonging to a licensed spectrum; or,
belonging to an unlicensed spectrum.

Optionally, a common message of a serving cell is transmitted via a target resource block, and the target resource block is one of the at least two resource blocks.

Optionally, the scheduling information includes at least one of:

modulation and coding schemes (MCS) of scheduled resource blocks;
antenna port indication information of scheduled resource blocks; or,
resource indication information of scheduled resource blocks.

Optionally, in a case that the scheduling information includes the MCSs of the scheduled resource blocks:

the scheduling information includes one MCS indication field, the MCS indication field indicates the MCSs of all scheduled resource blocks, and all scheduled resource blocks have identical modulation orders and code rates; or,
the scheduling information includes at least two MCS indication fields, each MCS indication field correspondingly indicates the MCS of one scheduled resource block, and different resource blocks have identical or different modulation orders.

Optionally, in a case that the scheduling information includes the antenna port indication information of the scheduled resource blocks:

the scheduling information includes one antenna port indication field, the antenna port indication field indicates antenna port configuration parameters of all scheduled resource blocks, and the antenna port configuration parameters of all scheduled resource blocks are the same; or,
the scheduling information includes at least two antenna port indication fields, each antenna port indication field correspondingly indicates an antenna port configuration parameter of one scheduled resource block, and the antenna port configuration parameters of different resource blocks are the same or different;
the antenna port configuration parameter includes at least one of:

a quantity of demodulation reference signal (DMRS) CDM groups without data;
a DMRS port index; or,
a rank value for data transmission.

Optionally, the resource indication information of the resource blocks includes frequency domain indication information, and bits occupied by the frequency domain indication information are determined based on a bandwidth of a configured target resource block;
the target resource block includes: a resource block belonging to a licensed spectrum; or the target resource block includes: a resource block belonging to a licensed spectrum and a resource block belonging to an unlicensed spectrum.

Optionally, in a case that a scheduled resource block belongs to an unlicensed spectrum, the scheduling information further includes: an unlicensed spectrum data transmission indicator;
the unlicensed spectrum data transmission indicator is used to indicate that the network device confirms a transmission or the network device does not confirm a transmission.

It should be noted that the device embodiments are in a one-to-one correspondence with the above method embodiments, all the implementations in the above method embodiments are applicable to the device embodiments, and the same technical effects can be achieved.

It should be noted that the division of units in the embodiments of this application is schematic and only serves as a division of logical functions, and there may be other division methods. In addition, in the embodiments of the present application, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present application, or the part contributing to the conventional technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present application. The storage medium includes a USB flash disk, a mobile hard disk, a read-only memory (Read-Only Memory, ROM), a random access memory (Random Access Memory, RAM), a magnetic disk, an optical disk, or other medium which can store program code.

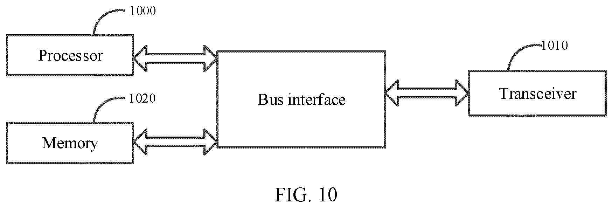

As shown in FIG. 10, embodiments of the present disclosure further provide a network device, including a processor 1000, a transceiver 1010, a memory 1020, and a program stored in the memory 1020 and executable by the processor 1000. The transceiver 1010 is connected to the processor 1000 and the memory 1020 via a bus interface. The processor 1000 is configured to read the program in the memory to perform following process:

obtaining configuration information for at least two resource blocks; and
transmitting, via the transceiver 1010, scheduling information to a terminal device, where the scheduling information is used to indicate a terminal device to perform data transmission and/or reception on at least part of resources of the at least two resource blocks based on the configuration information;
the at least two resource blocks belong to one cell or one bandwidth part, and the resource block includes at least one of: a frequency domain resource block, a time domain resource block, a code domain resource block, or a spatial domain resource block.

The transceiver 1010 is configured to receive and send data under control of the processor 1000.

In FIG. 10, a bus architecture may include any quantity of interconnected buses and bridges. Various circuits including one or more processors represented by the processor 1000 and a memory represented by the memory 1020 are linked. The bus architecture may further link various other circuits together, such as a periphery component, a voltage stabilizer and a power management circuit, which are known in the art and are not further described herein. A bus interface provides an interface. The transceiver 1010 may be multiple elements, i.e., including a transmitter and a receiver, providing a unit for communicating with various other devices on transmission media. The transmission media include a wireless channel, a wired channel, an optical cable, or other transmission media.

The processor 1000 is in charge of managing the bus architecture and common processes. The memory 1020 may store data used by the processor 1000 in performing operations.

Optionally, the processor 1000 may be a CPU (Central Processing Device), an ASIC (Application Specific Integrated Circuit), a FPGA (Field Programmable Gate Array), or a CPLD (Complex Programmable Logic Device), or the processor may adopt a multi-core architecture.

The processor is configured to execute any of the methods in the embodiments of the present application according to obtained executable instructions by calling the computer program stored in the memory. The processor and the memory may be physically arranged separately.

Optionally, the configuration information includes at least one of:

a resource starting location;
a resource width; or,
frequency point information.

Optionally, the configuration information further includes at least one of:

a subcarrier spacing (SCS); or,
a cyclic prefix (CP) type.

Optionally, the at least two resource blocks satisfy at least one of:

a sum of resource quantities of the at least two resource blocks is less than or equal to a preset resource quantity threshold; or,
the at least two resource blocks do not overlap with each other.

Optionally, the preset resource quantity threshold is a maximum value configured for one carrier or one bandwidth part.

Optionally, the resource block satisfies at least one of:

belonging to a licensed spectrum; or,
belonging to an unlicensed spectrum.

Optionally, a common message of a serving cell is transmitted via a target resource block, and the target resource block is one of the at least two resource blocks.

Optionally, the scheduling information includes at least one of:

modulation and coding schemes (MCS) of scheduled resource blocks;
antenna port indication information of scheduled resource blocks; or,
resource indication information of scheduled resource blocks.

Optionally, in a case that the scheduling information includes the MCSs of the scheduled resource blocks:

the scheduling information includes one MCS indication field, the MCS indication field indicates the MCSs of all scheduled resource blocks, and all scheduled resource blocks have identical modulation orders and code rates; or,
the scheduling information includes at least two MCS indication fields, each MCS indication field correspondingly indicates the MCS of one scheduled resource block, and different resource blocks have identical or different modulation orders.

Optionally, in a case that the scheduling information includes the antenna port indication information of the scheduled resource blocks:

the scheduling information includes one antenna port indication field, the antenna port indication field indicates antenna port configuration parameters of all scheduled resource blocks, and the antenna port configuration parameters of all scheduled resource blocks are the same; or,
the scheduling information includes at least two antenna port indication fields, each antenna port indication field correspondingly indicates an antenna port configuration parameter of one scheduled resource block, and the antenna port configuration parameters of different resource blocks are the same or different;
the antenna port configuration parameter includes at least one of:

a quantity of demodulation reference signal (DMRS) CDM groups without data;
a DMRS port index; or,
a rank value for data transmission.

Optionally, the resource indication information of the resource blocks includes frequency domain indication information, and bits occupied by the frequency domain indication information are determined based on a bandwidth of a configured target resource block;

the target resource block includes: a resource block belonging to a licensed spectrum; or the target resource block includes: a resource block belonging to a licensed spectrum and a resource block belonging to an unlicensed spectrum.

Optionally, in a case that a scheduled resource block belongs to an unlicensed spectrum, the scheduling information further includes: an unlicensed spectrum data transmission indicator;

the unlicensed spectrum data transmission indicator is used to indicate that the network device confirms a transmission or the network device does not confirm a transmission.

It should be noted that the network device according to the embodiments of this application can realize all the method steps in the method embodiments, and the same technical effects can be realized. The same parts of the present embodiments as the method embodiments, and the beneficial effects, are not repeated herein.

Embodiments of this application also provide a computer readable storage medium, having a computer program stored thereon, and the computer program, when being executed by a processor, performs various processes in the information transmission method applied to the network device. The readable storage medium may be any available medium or data storage device that the processor may access, including but not limited to a magnetic memory (such as a floppy disk, a hard disk, a magnetic tape, a magneto-optical disk (MO), etc.), an optical memory (such as a compact disk (CD), a digital versatile disc (DVD), a Blu-ray disc (BD), a high-definition versatile disc (HVD), etc.), or a semiconductor memory (such as a ROM, an erasable programmable read-only memory (EPROM), an electrically erasable programmable read-only memory (EEPROM), a non-volatile memory (NAND FLASH), a solid state disk or solid state driver (SSD)).

A person skilled in the art should understand that the embodiments of this application may be provided as methods, systems, or computer program products. Therefore, this application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

This application is described with reference to flowcharts and/or block diagrams of methods, devices (systems), and computer program products according to the embodiments of this application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

Apparently, those skilled in the art may make various modifications and variations to this application, without departing from the spirit and scope of this application. In this case, if the modifications and variations of this application fall within the scope of the claims of this application and their equivalent techniques, this application is intended to include these modifications and variations.

## Claims

1. An information transmission method, performed by a terminal device, comprising:

   determining configuration information for at least two resource blocks; and
   receiving scheduling information transmitted by a network device, wherein the scheduling information is used to indicate the terminal device to perform data transmission and/or reception on at least part of resources of the at least two resource blocks based on the configuration information;
   wherein the at least two resource blocks belong to one cell or one bandwidth part, and the resource block comprises at least one of: a frequency domain resource block, a time domain resource block, a code domain resource block, or a spatial domain resource block.

2.  The information transmission method according to claim 1, wherein the configuration information comprises at least one of:

    a resource starting location;
    a resource width; or,
    frequency point information.

3.  The information transmission method according to claim 1, wherein the at least two resource blocks satisfy at least one of:

    a sum of resource quantities of the at least two resource blocks is less than or equal to a preset resource quantity threshold; or,
    the at least two resource blocks do not overlap with each other.

4.  The information transmission method according to claim 3, wherein the preset resource quantity threshold is a maximum value configured for one carrier or one bandwidth part.

5.  The information transmission method according to claim 1, wherein the resource block satisfies at least one of:

    belonging to a licensed spectrum; or,
    belonging to an unlicensed spectrum.

6.  The information transmission method according to claim 1, wherein a common message of a serving cell is transmitted via a target resource block, and the target resource block is one of the at least two resource blocks.

7.  The information transmission method according to claim 1, wherein the scheduling information comprises at least one of:

    modulation and coding schemes (MCS) of scheduled resource blocks;
    antenna port indication information of scheduled resource blocks; or,
    resource indication information of scheduled resource blocks.

8.  The information transmission method according to claim 7, wherein in a case that the scheduling information comprises the MCSs of the scheduled resource blocks:

    the scheduling information comprises one MCS indication field, the MCS indication field indicates the MCSs of all scheduled resource blocks, and all scheduled resource blocks have identical modulation orders and code rates; or,
    the scheduling information comprises at least two MCS indication fields, each MCS indication field correspondingly indicates the MCS of one scheduled resource block, and different resource blocks have identical or different modulation orders.

9.  The information transmission method according to claim 7, wherein in a case that the scheduling information comprises the antenna port indication information of the scheduled resource blocks:

    the scheduling information comprises one antenna port indication field, the antenna port indication field indicates antenna port configuration parameters of all scheduled resource blocks, and the antenna port configuration parameters of all scheduled resource blocks are the same; or,
    the scheduling information comprises at least two antenna port indication fields, each antenna port indication field correspondingly indicates an antenna port configuration parameter of one scheduled resource block, and the antenna port configuration parameters of different resource blocks are the same or different;
    wherein the antenna port configuration parameter comprises at least one of:

        a quantity of demodulation reference signal (DMRS) CDM groups without data;
        a DMRS port index; or,

a rank value for data transmission.

10. The information transmission method according to claim 7, wherein the resource indication information of the resource blocks comprises frequency domain indication information, and bits occupied by the frequency domain indication information are determined based on a bandwidth of a configured target resource block;

wherein the target resource block comprises: a resource block belonging to a licensed spectrum; or the target resource block comprises: a resource block belonging to a licensed spectrum and a resource block belonging to an unlicensed spectrum.

11. The information transmission method according to claim 7 or claim 10, wherein in a case that a scheduled resource block belongs to an unlicensed spectrum, the scheduling information further comprises: an unlicensed spectrum data transmission indicator;

wherein the unlicensed spectrum data transmission indicator is used to indicate that the network device confirms a transmission or the network device does not confirm a transmission.

12. The information transmission method according to claim 1, further comprising:

receiving, via a reception module corresponding to X target objects, Y resource blocks transmitted by the network device;

wherein X and Y are positive integers greater than or equal to 1, X is less than Y, the target object comprises: a cell, a carrier or a bandwidth part, and reception module comprises: a channel estimation module, a quadrature amplitude modulation (QAM) demapping module and a channel decoding module.

13. An information transmission method, performed by a network device, comprising:

obtaining configuration information for at least two resource blocks; and
transmitting scheduling information to a terminal device, wherein the scheduling information is used to indicate a terminal device to perform data transmission and/or reception on at least part of resources of the at least two resource blocks based on the configuration information;
wherein the at least two resource blocks belong to one cell or one bandwidth part, and the resource block comprises at least one of: a frequency domain resource block, a time domain resource block, a code domain resource block, or a spatial domain resource block.

14. The information transmission method according to claim 13, wherein the configuration information comprises at least one of:

a subcarrier spacing (SCS); or,
a cyclic prefix (CP) type.

15. The information transmission method according to claim 13, wherein the at least two resource blocks satisfy at least one of:

a sum of resource quantities of the at least two resource blocks is less than or equal to a preset resource quantity threshold; or,
the at least two resource blocks do not overlap with each other.

16. The information transmission method according to claim 15, wherein the preset resource quantity threshold is a maximum value configured for one carrier or one bandwidth part.

17. The information transmission method according to claim 13, wherein the resource block satisfies at least one of:

belonging to a licensed spectrum; or,
belonging to an unlicensed spectrum.

18. The information transmission method according to claim 13, wherein a common message of a serving cell is transmitted via a target resource block, and the target resource block is one of the at least two resource blocks.

19. The information transmission method according to claim 13, wherein the scheduling information comprises at least one of:

modulation and coding schemes (MCS) of scheduled resource blocks;
antenna port indication information of scheduled resource blocks; or,
resource indication information of scheduled resource blocks.

20. The information transmission method according to claim 19, wherein in a case that the scheduling information comprises the MCSs of the scheduled resource blocks:

the scheduling information comprises one MCS indication field, the MCS indication field indicates the MCSs of all scheduled resource blocks, and all scheduled resource blocks have identical modulation orders and code rates; or,
the scheduling information comprises at least two MCS indication fields, each MCS indication field correspondingly indicates the MCS of one scheduled resource block, and different resource blocks have identical or different modulation orders.

21. The information transmission method according to claim 19, wherein in a case that the scheduling information comprises the antenna port indication information of the scheduled resource blocks:

the scheduling information comprises one antenna port indication field, the antenna port indication field indicates antenna port configuration parameters of all scheduled resource blocks, and the antenna port configuration parameters of all scheduled resource blocks are the same; or,
the scheduling information comprises at least two antenna port indication fields, each antenna port indication field correspondingly indicates an antenna port configuration parameter of one scheduled resource block, and the antenna port configuration parameters of different resource blocks are the same or different;
wherein the antenna port configuration parameter comprises at least one of:

a quantity of demodulation reference signal (DMRS) CDM groups without data;
a DMRS port index; or,
a rank value for data transmission.

22. The information transmission method according to claim 19, wherein the resource indication information of the resource blocks comprises frequency domain indication information, and bits occupied by the frequency domain indication information are determined based on a bandwidth of a configured target resource block;
wherein the target resource block comprises: a resource block belonging to a licensed spectrum; or the target resource block comprises: a resource block belonging to a licensed spectrum and a resource block belonging to an unlicensed spectrum.

23. The information transmission method according to claim 19 or claim 22, wherein in a case that a scheduled resource block belongs to an unlicensed spectrum, the scheduling information further comprises: an unlicensed spectrum data transmission indicator;
wherein the unlicensed spectrum data transmission indicator is used to indicate that the network device confirms a transmission or the network device does not confirm a transmission.

24. A terminal device, comprising a memory, a transceiver, and a processor;
wherein the memory is configured to store a computer program, the transceiver is configured to transmit and receive data under control of the processor, and the processor is configured to read the computer program in the memory to perform following operations:

determining configuration information for at least two resource blocks; and
receiving, via the transceiver, scheduling information transmitted by a network device, wherein the scheduling information is used to indicate the terminal device to perform data transmission and/or reception on at least part of resources of the at least two resource blocks based on the configuration information;
wherein the at least two resource blocks belong to one cell or one bandwidth part, and the resource block comprises at least one of: a frequency domain resource block, a time domain resource block, a code domain resource block, or a spatial domain resource block.

25. The terminal device according to claim 24, wherein the configuration information comprises at least one of:

a resource starting location;
a resource width; or,
frequency point information.

26. The terminal device according to claim 24, wherein the at least two resource blocks satisfy at least one of:

a sum of resource quantities of the at least two resource blocks is less than or equal to a preset resource quantity threshold; or,
the at least two resource blocks do not overlap with each other.

27. The terminal device according to claim 26, wherein the preset resource quantity threshold is a maximum value configured for one carrier or one bandwidth part.

28. The terminal device according to claim 24, wherein the resource block satisfies at least one of:

belonging to a licensed spectrum; or,
belonging to an unlicensed spectrum.

29. The terminal device according to claim 24, wherein a common message of a serving cell is transmitted via a target resource block, and the target resource block is one of the at least two resource blocks.

30. The terminal device according to claim 24, wherein the scheduling information comprises at least one of:

modulation and coding schemes (MCS) of scheduled resource blocks;
antenna port indication information of scheduled resource blocks; or,
resource indication information of scheduled resource blocks.

31. The terminal device according to claim 30, wherein in a case that the scheduling information comprises the MCSs of the scheduled resource blocks:

the scheduling information comprises one MCS indication field, the MCS indication field indicates the MCSs of all scheduled resource blocks, and all scheduled resource blocks have identical modulation orders and code rates; or,
the scheduling information comprises at least two MCS indication fields, each MCS indication field correspondingly indicates the MCS of one scheduled resource block, and different resource blocks have identical or different modulation orders.

32. The terminal device according to claim 30, wherein in a case that the scheduling information comprises the antenna port indication information of the scheduled resource blocks:

the scheduling information comprises one antenna port indication field, the antenna port indication field indicates antenna port configuration parameters of all scheduled resource blocks, and the antenna port configuration parameters of all scheduled resource blocks are the same; or,
the scheduling information comprises at least two antenna port indication fields, each antenna port indication field correspondingly indicates an antenna port configuration parameter of one scheduled resource block, and the antenna port configuration parameters of different resource blocks are the same or different;
wherein the antenna port configuration parameter comprises at least one of:

a quantity of demodulation reference signal (DMRS) CDM groups without data;
a DMRS port index; or,
a rank value for data transmission.

33. The terminal device according to claim 30, wherein the resource indication information of the resource blocks comprises frequency domain indication information, and bits occupied by the frequency domain indication information are determined based on a bandwidth of a configured target resource block;
wherein the target resource block comprises: a resource block belonging to a licensed spectrum; or the target resource block comprises: a resource block belonging to a licensed spectrum and a resource block belonging to an unlicensed spectrum.

34. The terminal device according to claim 30 or claim 33, wherein in a case that a scheduled resource block belongs to an unlicensed spectrum, the scheduling information further comprises: an unlicensed spectrum data transmission indicator;

   wherein the unlicensed spectrum data transmission indicator is used to indicate that the network device confirms a transmission or the network device does not confirm a transmission.

35. The terminal device according to claim 24, wherein the processor is configured to read the computer program in the memory to further perform following operation:

   receiving, via a reception module corresponding to X target objects, Y resource blocks transmitted by the network device;
   wherein X and Y are positive integers greater than or equal to 1, X is less than Y, the target object comprises: a cell, a carrier or a bandwidth part, and reception module comprises: a channel estimation module, a quadrature amplitude modulation (QAM) demapping module and a channel decoding module.

36. A network device, comprising a memory, a transceiver, and a processor;
   wherein the memory is configured to store a computer program, the transceiver is configured to transmit and receive data under control of the processor, and the processor is configured to read the computer program in the memory to perform following operations:

   obtaining configuration information for at least two resource blocks; and
   transmitting, via the transceiver, scheduling information to a terminal device, wherein the scheduling information is used to indicate a terminal device to perform data transmission and/or reception on at least part of resources of the at least two resource blocks based on the configuration information;
   wherein the at least two resource blocks belong to one cell or one bandwidth part, and the resource block comprises at least one of: a frequency domain resource block, a time domain resource block, a code domain resource block, or a spatial domain resource block.

37. An information transmission device, applied to a terminal device, comprising:

   a determination unit, configured to determine configuration information for at least two resource blocks; and
   a first reception unit, configured to receive scheduling information transmitted by a network device, wherein the scheduling information is used to indicate the terminal device to perform data transmission and/or reception on at least part of resources of the at least two resource blocks based on the configuration information;
   wherein the at least two resource blocks belong to one cell or one bandwidth part, and the resource block comprises at least one of: a frequency domain resource block, a time domain resource block, a code domain resource block, or a spatial domain resource block.

38. The information transmission device according to claim 37, wherein the configuration information comprises at least one of:

   a resource starting location;
   a resource width; or,
   frequency point information.

39. The information transmission device according to claim 37, wherein the at least two resource blocks satisfy at least one of:

   a sum of resource quantities of the at least two resource blocks is less than or equal to a preset resource quantity threshold; or,
   the at least two resource blocks do not overlap with each other.

40. The device according to claim 39, wherein the preset resource quantity threshold is a maximum value configured for one carrier or one bandwidth part.

41. The information transmission device according to claim 37, wherein the resource block satisfies at least one of:

   belonging to a licensed spectrum; or,

belonging to an unlicensed spectrum.

42. The information transmission device according to claim 37, wherein a common message of a serving cell is transmitted via a target resource block, and the target resource block is one of the at least two resource blocks.

43. The information transmission device according to claim 37, wherein the scheduling information comprises at least one of:

modulation and coding schemes (MCS) of scheduled resource blocks;
antenna port indication information of scheduled resource blocks; or,
resource indication information of scheduled resource blocks.

44. The information transmission device according to claim 43, wherein in a case that the scheduling information comprises the MCSs of the scheduled resource blocks:

the scheduling information comprises one MCS indication field, the MCS indication field indicates the MCSs of all scheduled resource blocks, and all scheduled resource blocks have identical modulation orders and code rates; or,
the scheduling information comprises at least two MCS indication fields, each MCS indication field correspondingly indicates the MCS of one scheduled resource block, and different resource blocks have identical or different modulation orders.

45. The information transmission device according to claim 43, wherein in a case that the scheduling information comprises the antenna port indication information of the scheduled resource blocks:

the scheduling information comprises one antenna port indication field, the antenna port indication field indicates antenna port configuration parameters of all scheduled resource blocks, and the antenna port configuration parameters of all scheduled resource blocks are the same; or,
the scheduling information comprises at least two antenna port indication fields, each antenna port indication field correspondingly indicates an antenna port configuration parameter of one scheduled resource block, and the antenna port configuration parameters of different resource blocks are the same or different;
wherein the antenna port configuration parameter comprises at least one of:

a quantity of demodulation reference signal (DMRS) CDM groups without data;
a DMRS port index; or,
a rank value for data transmission.

46. The information transmission device according to claim 43, wherein the resource indication information of the resource blocks comprises frequency domain indication information, and bits occupied by the frequency domain indication information are determined based on a bandwidth of a configured target resource block;
wherein the target resource block comprises: a resource block belonging to a licensed spectrum; or the target resource block comprises: a resource block belonging to a licensed spectrum and a resource block belonging to an unlicensed spectrum.

47. The information transmission device according to claim 43 or claim 46, wherein in a case that a scheduled resource block belongs to an unlicensed spectrum, the scheduling information further comprises: an unlicensed spectrum data transmission indicator;
wherein the unlicensed spectrum data transmission indicator is used to indicate that the network device confirms a transmission or the network device does not confirm a transmission.

48. The information transmission device according to claim 37, further comprising:

a second reception unit, configured to receive, via a reception module corresponding to X target objects, Y resource blocks transmitted by the network device;
wherein X and Y are positive integers greater than or equal to 1, X is less than Y, the target object comprises: a cell, a carrier or a bandwidth part, and reception module comprises: a channel estimation module, a quadrature amplitude modulation (QAM) demapping module and a channel decoding module.

**EP 4 637 240 A1**

49. An information transmission device, applied to a network device, comprising:

an obtaining unit, used to obtain configuration information for at least two resource blocks; and
a transmission unit, configured to transmit scheduling information to a terminal device, wherein the scheduling information is used to indicate a terminal device to perform data transmission and/or reception on at least part of resources of the at least two resource blocks based on the configuration information;
wherein the at least two resource blocks belong to one cell or one bandwidth part, and the resource block comprises at least one of: a frequency domain resource block, a time domain resource block, a code domain resource block, or a spatial domain resource block.

50. The information transmission device according to claim 49, wherein the configuration information comprises at least one of:

a subcarrier spacing (SCS); or,
a cyclic prefix (CP) type.

51. The information transmission device according to claim 49, wherein the at least two resource blocks satisfy at least one of:

a sum of resource quantities of the at least two resource blocks is less than or equal to a preset resource quantity threshold; or,
the at least two resource blocks do not overlap with each other.

52. The device according to claim 51, wherein the preset resource quantity threshold is a maximum value configured for one carrier or one bandwidth part.

53. The information transmission device according to claim 49, wherein the resource block satisfies at least one of:

belonging to a licensed spectrum; or,
belonging to an unlicensed spectrum.

54. The information transmission device according to claim 49, wherein a common message of a serving cell is transmitted via a target resource block, and the target resource block is one of the at least two resource blocks.

55. The information transmission device according to claim 49, wherein the scheduling information comprises at least one of:

modulation and coding schemes (MCS) of scheduled resource blocks;
antenna port indication information of scheduled resource blocks; or,
resource indication information of scheduled resource blocks.

56. The information transmission device according to claim 55, wherein in a case that the scheduling information comprises the MCSs of the scheduled resource blocks:

the scheduling information comprises one MCS indication field, the MCS indication field indicates the MCSs of all scheduled resource blocks, and all scheduled resource blocks have identical modulation orders and code rates; or,
the scheduling information comprises at least two MCS indication fields, each MCS indication field correspondingly indicates the MCS of one scheduled resource block, and different resource blocks have identical or different modulation orders.

57. The information transmission device according to claim 56, wherein in a case that the scheduling information comprises the antenna port indication information of the scheduled resource blocks:

the scheduling information comprises one antenna port indication field, the antenna port indication field indicates antenna port configuration parameters of all scheduled resource blocks, and the antenna port configuration parameters of all scheduled resource blocks are the same; or,
the scheduling information comprises at least two antenna port indication fields, each antenna port indication field correspondingly indicates an antenna port configuration parameter of one scheduled resource block, and the antenna port configuration parameters of different resource blocks are the same or different; wherein the antenna port configuration parameter comprises at least one of:

a quantity of demodulation reference signal (DMRS) CDM groups without data;
a DMRS port index; or,
a rank value for data transmission.

58. The information transmission device according to claim 56, wherein the resource indication information of the resource blocks comprises frequency domain indication information, and bits occupied by the frequency domain indication information are determined based on a bandwidth of a configured target resource block; wherein the target resource block comprises: a resource block belonging to a licensed spectrum; or the target resource block comprises: a resource block belonging to a licensed spectrum and a resource block belonging to an unlicensed spectrum.

59. The information transmission device according to claim 56 or claim 58, wherein in a case that a scheduled resource block belongs to an unlicensed spectrum, the scheduling information further comprises: an unlicensed spectrum data transmission indicator; wherein the unlicensed spectrum data transmission indicator is used to indicate that the network device confirms a transmission or the network device does not confirm a transmission.

60. A processor readable storage medium, having a computer program stored thereon, wherein the computer program is used to cause a processor to perform the information transmission method according to any one of claims 1 to 23.

FIG. 1

RB_start: Starting frequency domain location

RB_end: Ending frequency domain location

FIG. 2

| Determining configuration information for at least two resource blocks | S301 |
|---|---|

| Receiving scheduling information transmitted by a network device | S302 |

FIG. 3

☐ FDRB (Frequency domain resource block)

FIG. 4

Demodulation/
decoding module

Channel
estimation module

Demapping module

FFT processing
module

Channel
estimation

Demodulation
/decoding

Channel
estimation

<=133 PRB

<=133 PRB

Demapping

<=133 PRB

<=133 PRB

Demapping

<=133 PRB

FFT (2048)

A/D

Integrated-
carrier 1

FFT (2048)

A/D

Integrated-
carrier 2

Process data reception of multiple integrated-carriers using a single-carrier processing unit

FIG. 5

Obtaining configuration information for at least two resource blocks — S601

Transmitting scheduling information to a terminal device — S602

FIG. 6

Information transmission device — 700

Determination unit — 701

First reception unit — 702

FIG. 7

Processor — 800

Bus interface

Transceiver — 810

Memory — 820

User interface — 830

FIG. 8

Information transmission device — 900

Obtaining unit — 901

Transmission unit — 902

FIG. 9

FIG. 10

## INTERNATIONAL SEARCH REPORT

| International application No. |
| --- |
| **PCT/CN2023/137751** |

### A. CLASSIFICATION OF SUBJECT MATTER

H04W72/0453(2023.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 小区, 带宽部分, 载波, 资源块, 划分, 配置, 分配, 多个, 两个, cell, BWP, carrier, resource block, RB, divide, configur+, allocat+, multi+, two

### C. DOCUMENTS CONSIDERED TO BE RELEVANT

| Category* | Citation of document, with indication, where appropriate, of the relevant passages | Relevant to claim No. |
| --- | --- | --- |
| X | CN 114666902 A (HUAWEI TECHNOLOGIES CO., LTD.) 24 June 2022 (2022-06-24) description, paragraphs 176-177, 261-262, 302-306 and 314 | 1-60 |
| X | CN 110351843 A (TELECOMMUNICATIONS TECHNOLOGY RESEARCH INSTITUTE CO., LTD.) 18 October 2019 (2019-10-18) description, paragraphs 224-229 | 1-60 |
| A | CN 109769300 A (HUAWEI TECHNOLOGIES CO., LTD.) 17 May 2019 (2019-05-17) entire document | 1-60 |
| A | CN 111865525 A (POTEVIO INFORMATION TECHNOLOGY CO., LTD.) 30 October 2020 (2020-10-30) entire document | 1-60 |
| A | WO 2022104689 A1 (HUAWEI TECHNOLOGIES CO., LTD.) 27 May 2022 (2022-05-27) entire document | 1-60 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 February 2024** | **18 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/137751**

| Patent document cited in search report | | | Publication date (day/month/year) | Patent family member(s) | | | Publication date (day/month/year) |
|---|---|---|---|---|---|---|---|
| CN | 114666902 | A | 24 June 2022 | None | | | |
| CN | 110351843 | A | 18 October 2019 | None | | | |
| CN | 109769300 | A | 17 May 2019 | EP | 3866529 | A1 | 18 August 2021 |
| | | | | EP | 3573392 | A1 | 27 November 2019 |
| | | | | BR | 112020008721 | A2 | 03 November 2020 |
| | | | | US | 2022345260 | A1 | 27 October 2022 |
| | | | | KR | 20200070350 | A | 17 June 2020 |
| | | | | RU | 2020119141 | A | 24 December 2021 |
| | | | | JP | 2021502758 | A | 28 January 2021 |
| | | | | CN | 108882376 | A | 23 November 2018 |
| | | | | US | 2019149286 | A1 | 16 May 2019 |
| | | | | US | 2020287675 | A1 | 10 September 2020 |
| CN | 111865525 | A | 30 October 2020 | None | | | |
| WO | 2022104689 | A1 | 27 May 2022 | None | | | |

Form PCT/ISA/210 (patent family annex) (July 2022)

**REFERENCES CITED IN THE DESCRIPTION**

**Patent documents cited in the description**

- CN 202211599843